# EUROPEAN PATENT SPECIFICATION

(11) **EP 2 025 969 B1**
(45) Date of publication and mention of the grant of the patent: **11.05.2011**
(21) Application number: 08252632.8
(22) Date of filing: 05.08.2008
(51) Int. Cl.: F16F 13/10

(54) **Fluid filled type vibration damping device and cover member therefor**
Flüssigkeitgefüllte Stoßdämpfungsvorrichtung und Abdeckglied dafür
Dispositif d'amortissement de vibration de type rempli de fluide et membrane couvrante correspondante

(30) Priority: 09.08.2007 JP 2007207333
(43) Date of publication of application: 18.02.2009
(73) Proprietor: TOKAI RUBBER INDUSTRIES, LTD., Komaki-shi, Aichi, 485-8550 (JP); Toyota Jidosha Kabushiki Kaisha, Toyota-shi, Aichi 471-8571, (JP)
(72) Inventor: Ichikawa, Hiroyuki, Komaki-shi, Aichi 485-8550 (JP); Nishimura, Yutaka, Toyota-shi, Aichi 471-8571 (JP)
(74) Representative: Nicholls, Michael John

(56) References cited:
- EP-A1- 0 894 995
- GB-A- 2 268 566
- JP-A- 2007 064 248

## Description

The present invention relates to a fluid filled type vibration damping device adapted to provide vibration damping action based on flow effects of a non-compressible fluid filling an interior fluid chamber; and in particular relates to a fluid filled type vibration damping device equipped with a cover member arranged so as to cover from the outside and protect a flexible rubber film that constitutes part of the wall of the fluid chamber, and to such a cover member.

One type of vibration damping device known in the art as vibration-damped coupling or vibration-damped support or the like for installation between components making up a vibration transmission system is a fluid filled type vibration damping device designed to produce vibration damping action on the basis of flow effects of a non-compressible fluid. This fluid filled type vibration damping device has a first mounting member and a second mounting member positioned spaced apart from one another and elastically linked by a main rubber elastic body; and an internal fluid chamber filled with a non-compressible fluid. The fluid chamber is divided by a partition member which is fixedly supported on the second mounting member, thereby respectively forming to either side of the partition member a pressure-receiving chamber a portion of whose wall is defined by the main rubber elastic body, and an equilibrium chamber a portion of whose wall is defined by a flexible rubber film, with the pressure receiving chamber and the equilibrium chamber communicating with one another through an orifice passage. With this structure, when relative pressure fluctuations between the pressure receiving chamber and the equilibrium chamber are produced in association with input of vibration, vibration damping action is produced on the basis of flow effects, such as the resonance effect, of fluid flowing through the orifice passage. Implementation of such fluid filled type vibration damping devices in automotive engine mounts, body mounts, diff mounts, or other suspension mounts for example, is an issue of ongoing interest.

In fluid filled type vibration damping devices of the above type, it is common practice for the flexible rubber film to be made from a thin rubber film so as to ensure an adequate level of allowable change in volume of the equilibrium chamber, and for the film to be disposed bulging towards the outside on the side opposite from the pressure-receiving chamber side of the partition member. However, this poses a risk that other parts or foreign matter will come into direct contact with the flexible rubber film and cause unanticipated damage.

To address this problem, there has been proposed, for example in JP-A-2007-64248, a fluid filled type vibration damping device of a design in which the flexible rubber film which covers one of the openings of a tubular portion constituting the second mounting member is covered from the outside by a cover member of inverted cup shape in order to protect the flexible rubber film. In this fluid filled type vibration damping device, the aperture section of the cover member projects out with a tubular shape, and at the rim of the aperture situated at its distal end there is formed a hook-shaped catch portion which projects up from the inner peripheral face. Meanwhile, on the outside peripheral face of the rim of the aperture of the tubular portion constituting the second mounting member, there is integrally formed with the flexible rubber film a bulging portion that extends continuously about the entire circumference. By juxtaposing the catch portion against the lower end face of the bulging portion so as to straddle the bulging portion in the axial direction, the catch portion is engaged by the bulging portion, thereby attaching the cover member to the flexible rubber film.

However, with the fluid filled type vibration damping device disclosed in the aforementioned JP-A-2007-64248, because the bulging portion which engages with the catch portion of the cover member has been integrally formed with the flexible rubber film, permanent set in fatigue of the bulging portion which is made from this film may result in the cover member turning with respect to the vibration damping device unit; or in rattling or in a tendency to become detached; or otherwise making it difficult to achieve stable assembly. In particular, where the fluid filled type vibration damping device will be employed in an automotive engine mount or the like, permanent set in fatigue of the bulging portion can become a severe problem if the mount is exposed to radiant heat or hot fumes from the engine. Thus, an inherent problem was the difficulty of ensuring adequately reliable and enduring protection of the flexible rubber film.

In view of the above issue, the inventors have investigated the possibility of forming not only the cover member, but also the catch section of the vibration damping device unit entirely of hard synthetic resin or metal material. However, where the structure depicted in the drawings of JP-A-2007-64248 is employed, it is necessary during the assembly process for the hook-shaped catch portion to surmount the bulging portion in the axial direction in order to become engaged therewith. For this reason, if the catch section is not made of rubber or similar material is will not readily deform, thus making assembly more difficult. If on the other hand the bulging portion is reduced in size to improve the ease of the assembly procedure, there is a risk that the catch portion and the bulging portion will be easily disengaged, making this approach impractical. The possibility of using a screw structure or adhesive was investigated as well, but the considerable time and labor needed for the assembly process made this impractical.

It is therefore one object of this invention to provide a fluid filled type vibration damping device of novel structure affording a simple assembly structure for attaching the cover member to the second mounting member side, and also affording reliable attachment of the cover member and consequently good protection of the flexible rubber film; as well as a cover member for use in such a fluid filled type vibration damping device.

The above and/or optional objects of this invention may be attained according to at least one of the following modes of the invention. The following modes and/or elements employed in each mode of the invention may be adopted at any possible optional combinations. It is to be understood that the principle of the invention is not limited to these modes of the invention and combinations of the technical features, but may otherwise be recognized based on the teachings of the present invention disclosed in the entire specification and drawings or that may be recognized by those skilled in the art in the light of the present disclosure in its entirety.

One aspect of the present invention provides A fluid filled type vibration damping device including: a first mounting member positioned spaced apart from a first opening of a tubular portion of a second mounting member, with the first mounting member and the second mounting member being connected by a main rubber elastic body; a fluid chamber filled with non-compressible fluid and formed by fluid-tight closure of the first opening of the tubular portion by the main rubber elastic body and by fluid-tight closure of another opening of the tubular portion by a flexible rubber film; a partition member supported on the second mounting member thereby dividing the fluid chamber into a pressure receiving chamber a portion of whose wall is defined by the main rubber elastic body, and an equilibrium chamber a portion of whose wall is defined by the flexible rubber film; and an orifice passage through which the pressure receiving chamber and the equilibrium chamber communicate with each other, wherein a projecting catch portion is formed projecting towards an outer peripheral side from the second mounting member and extending in a circumferential direction, an annular fastening fitting is bonded by vulcanization to an outside peripheral edge portion of the flexible rubber film, with the annular fastening fitting fastened to the tubular portion of the second mounting member thereby providing the other opening of the tubular portion with fluid-tight closure by the flexible rubber film, and a rubber sheath layer is integrally formed with the flexible rubber film over an outside face at an inner peripheral edge portion of the annular fastening fitting to which the outside peripheral edge portion of the flexible rubber film has been bonded by vulcanization, a cover member is attached covering the flexible rubber film from an outside, the cover member includes at least one contacting projection provided to an outside peripheral section of the cover member in a part thereof that contacts the rubber sheath layer, and catch pieces extending in an axial direction towards the tubular portion of the second mounting member disposed at multiple locations along a circumference of an outside peripheral edge portion of the cover member, and the catch pieces engage the projecting catch portion in a direction arresting detachment in the axial direction so that the contacting projection is pressed in the axial direction against the rubber sheath layer.

In the fluid filled type vibration damping device of the structure according to the present invention, by pressing the contacting projection in the axial direction (which is the same as the axial direction of the tubular portion) against the rubber sheath layer, elasticity of the compression deformed rubber will become directed onto the cover member in the axial direction. A high level of abutting force in the axial direction will thereby act on the engaged zones of the catch pieces of the cover member and the projecting catch portion on the second mounting member side, thus stabilizing the condition of attachment of the cover member. That is, with the catch pieces engaged by the projecting catch portion, elasticity of the rubber sheath layer will be directed onto the cover member, thereby suppressing rattling of the cover member and maintaining consistent protection of the flexible rubber film.

Moreover, by pressing the contacting projections in the axial direction against the rubber sheath layer and placing it in contact therewith so as to dig into the layer, the effect of positioning the cover member with respect to the flexible rubber film will be achieved in addition to that of preventing rattling of the cover member in the circumferential direction. That is, the contacting sections of the contacting projections and the rubber sheath layer will have irregular contours rather than a simple flat contour, thereby improving the positioning of the cover member in the circumferential direction with respect to the flexible rubber film and the annular fastening fitting.

Furthermore, since the rubber sheath layer is formed so as to sheath the annular fastening fitting, and the contacting projections are juxtaposed against the annular fastening fitting via this intervening rubber sheath layer, it will be possible to avoid situations where the contacting projections dig into the rubber sheath layer any more than necessary, or where over time the extent of dig-in becomes progressively larger to the point of being excessive. The durability of the rubber sheath layer may be improved thereby, and the elasticity of the rubber may be maintained consistently over extended periods.

Furthermore, since the catch pieces of the cover member are disposed at multiple locations rather than extending continuously about the entire circumference, the level of allowable deformation will be greater than where the section on the circumference of the cover member provided with the catch piece is of tubular shape that extends continuously in the circumferential direction. Thus, when attaching the cover member, the section on the circumference of the cover member where the catch pieces are disposed may be induced to deform so as to splay diametrically outward for example, thereby reducing contact resistance when the catch pieces surmount the projecting catch portion as well as facilitating interlocking of the catch pieces and the projecting catch portion, making for an easier assembly operation.

For this reason, the fluid filled type vibration damping device of the present invention affords both a simpler attachment structure for the cover member, and a more stable attached condition.

It is not necessary for the projecting catch portion to be integrally formed with the second mounting member per se, and a separate component may be used arranged projecting to the outer peripheral side of the second mounting member. For example, it would be possible to form the projecting catch portion on a bracket for the purpose of installing and fastening the second mounting member onto a component to be damped; or to form the projecting catch portion utilizing the annular fastening fitting of the flexible rubber film.

With regard to the catch pieces, it is sufficient to provide at least two along the circumference, and the number, circumferential length of the individual catch pieces, the distance separating adjacent catch pieces in the circumferential direction, and other arrangements may be redesigned appropriately depending on the required locking strength, ease of fabrication, ease of assembly, the size of the fluid filled type vibration damping device, and other factors.

Moreover, in the fluid filled type vibration damping device according to the invention, there may also be employed a structure in which the cover member has a full cover structure covering the flexible rubber film over an entire area thereof. It will be possible thereby to completely prevent other components or foreign matter from coming into direct contact with the flexible rubber film, and to afford more favorable protection of the flexible rubber film.

With this structure in particular, it will be possible to produce a hermetic zone between the opposing faces of the cover member and the flexible rubber film, and by employing a structure having a hermetic air chamber formed to the outside of the flexible rubber film, it will be possible to utilize limitation of the extent of elastic deformation of the flexible rubber film through action as an air spring in the hermetic state, in order to tune the spring characteristics of the vibration damping device.

The full cover structure refers to a structure wherein the shape of the cover member is such that, when the flexible rubber film is viewed from outside in the axial direction of the tubular portion, the entirety of that portion of the flexible rubber film which is not constrained by the annular fastening fitting will covered by the cover member and will not be visible directly. Here, communicating holes or other such gaps, holes, or slots through which the space defined between the opposed faces of the cover member and the rubber sheath layer communicates with outside space may be provided, for example, in the side wall of the cover member, in the upper end of the rubber sheath layer, between the axially opposed faces of the cover member outside peripheral edge portion and the rubber sheath layer, and so on.

The fluid filled type vibration damping device according to the present invention may also employ a structure wherein the contacting projections in the cover member have tapered shape. With such a structure, when the contacting projections are pressed against the rubber sheath layer, they will dig in through a more localized area, whereby elasticity on the part of the rubber can be obtained more effectively, and the effect of preventing detachment or rotation of the cover member may be advantageously improved.

In the fluid filled type vibration damping device according to the present invention, there may be employed in the cover member a structure wherein the contacting projections have shape extending in a diametrical direction. With such a structure, the contacting projections will dig into the rubber sheath layer and extend in its diametrical direction, thereby more advantageously suppressing rattling of the cover member in the circumferential direction.

Moreover, in the fluid filled type vibration damping device according to the present invention there may be employed a structure wherein atmosphere-communicating passages are formed connecting the space defined between the opposing faces of the cover member and the flexible rubber film to the outside space, and the passages are situated in sections devoid of contacting projections between the juxtaposed faces of the rubber sheath layer and the outside peripheral section of the cover member. With this arrangement, it is possible to avoid creating a hermetic zone between the opposing faces of the cover member and the flexible rubber film, thus eliminating the problem of variability in the characteristics of the vibration damping device resulting from changes in the extent of elastic deformation of the flexible rubber film due to air spring action occurring under hermetic conditions.

Furthermore, in the fluid filled type vibration damping device according to the present invention there may be employed a structure in which the contacting projection is disposed at the locations of the catch pieces on the outside peripheral section of the cover member. With this arrangement, the elasticity of the rubber can be exerted efficiently on the catch pieces due to the contacting projections being pressed against the rubber sheath layer in the axial direction, thus affording a more stable condition of attachment of the cover member.

Moreover, in the fluid filled type vibration damping device according to the present invention, there may be employed a structure in which spacer projecting portions which contact the rubber sheath layer over a greater contact area than do the contacting projections are formed in the outside peripheral section of the cover member at locations on the circumference thereof different from those of the contacting projections in the section contacting the rubber sheath layer. According to this structure, with the cover member attached to the projecting catch portion, if the cover member deforms so as to sag in the axial direction, the spacer projecting portions which are situated at different locations from the contacting projections on the circumference will readily come into contact with the rubber sheath layer. Thus, in the event that for example the catch pieces experience deformation diametrically outward in association with the cover member coming into contact with another component and yielding thereto, the spacer projecting portions will come into contact against the rubber sheath layer and restrain the extent of yielding deformation of the cover member, thereby limiting the extent of diametrically outward deformation of the catch pieces as well. That is, in a fluid filled type vibration damping device of this structure, once the catch pieces have engaged with the projecting catch portion and the cover member has been attached to the projecting catch portion, excessive yielding of the cover member to external input will be restrained, and the catch pieces and the projecting catch portion will be held stably in the engaged state, whereby the durability of the cover member and the stability of attachment thereof to the projecting catch portion may be further improved.

Furthermore, with the above structure, once the spacer projecting portions and the contacting projections of the cover member come into contact against the rubber sheath layer, a gap will readily be produced in the axial direction between the rubber sheath layer and sections of the cover member between spacer projecting portions and contacting projections situated adjacently in the circumferential direction. It will be possible to utilize this gap as the aforementioned atmosphere-communicating passage through which the space between the opposing faces of the cover member and the flexible rubber film communicate with the outside space, making it a simple matter to form the atmosphere-communicating passage and advantageously improving production efficiency.

Moreover, in the fluid filled type vibration damping device according to the present invention, there may be employed a structure in which the spacer projecting portions are formed in circumferentially central sections between adjacent contacting projections in the circumferential direction in the outside peripheral section of the cover member. With such a structure, sufficient zones of contact between the spacer projecting portions and the rubber sheath layer will be ensured, and the effect of restraining yielding of the cover member upon contact of the spacer projecting portions against the rubber sheath layer may be brought out more effectively.

Additionally, in the fluid filled type vibration damping device according to the present invention, there may be employed a structure in which the annular fastening fitting has a tubular shape, a swage fastening portion for fastening to the tubular portion of the second mounting member is formed on the rim of a first opening in the axial direction, an inward flanged portion extending diametrically inward is formed on the rim of the other opening in the axial direction, and the outside peripheral edge portion of the flexible rubber film is bonded by vulcanization to this inward flanged portion so that the rubber sheath layer is formed sheathing the outside face of the inward flanged portion. With this arrangement, the annular fastening fitting may be reliably fastened to the second mounting member, and by juxtaposing the contacting projections of the cover member against the inward flanged portion of the annular fastening fitting via the intervening rubber sheath layer, the pressing force of the contacting projections in the axial direction will be exerted more consistently on the rubber sheath layer. For this reason, locking action of the catch pieces with the projecting catch portion on the basis of elasticity of the rubber can be produced even more efficiently, thereby more advantageously affording a stable condition of attachment of the cover member.

Furthermore, in the fluid filled type vibration damping device according to the present invention, there may be employed a structure in which a bracket fitting is externally fastened to the second mounting member, with the axial end edge of the bracket fitting projecting up from the outside peripheral face of the second mounting member, and with this projecting section of the bracket fitting constituting the projecting catch portion. According to this structure, the strength of the bracket fitting which is disposed between the second mounting member and the component to be damped and which is fastened to these two components can be utilized to achieve a projecting catch portion endowed with high strength, thereby affording greater stability of locking of the catch pieces with the projecting catch portion and further improving stability of attachment of the cover member. Additionally, stated another way, attachment of the cover member to the second mounting member via the bracket fitting means that the bracket fitting is fastened externally to the second mounting member as well as being fastened interlocked with the cover member, as a result affording more stable assembly of the bracket fitting and the second mounting member, and hence improved stability of attachment of the fluid filled type vibration damping device to the component to be damped.

Furthermore, in the fluid filled type vibration damping device according to the present invention there may be employed a structure in which the cover member is composed of an integrally molded component of synthetic resin material. According to such a structure, the level of required strength in relation to engagement with the projecting catch portion may be sufficiently assured as compared with a cover member of rubber material, while lighter weight and lower cost may be advantageously achieved as compared with a cover member of metal material.

A further feature of the present invention is the cover member which is used in the fluid filled type vibration damping device discussed above. As will be apparent from the above description of the fluid filled type vibration damping device, in the cover member of the structure according to the present invention, the effects of positioning the cover member and preventing rattling thereof in the circumferential direction with respect to the projecting catch portion are achieved through abutting action with the contacting projections digging into the rubber sheath layer; additionally, the effect of preventing the contacting projections from digging into the rubber sheath layer to an excessive degree is achieved through juxtaposition of the contacting projections against the annular fastening fitting via the intervening rubber sheath layer. Consequently, through synergistic action on the part of these effects it will be possible to obtain a cover member that maintains high retaining strength for an extended period.

The invention will now be described by way of non-limiting examples, with reference to the accompanying drawings, in which like reference numerals designate like elements and wherein:
FIG. 1 is an elevational view in vertical cross section of a fluid-filled type vibration damping device in the form of an automotive engine mount according to one preferred form of the invention, taken along line 1-1 of FIG. 2;
FIG. 2 is a top plane view of the automotive engine mount of FIG. 1;
FIG. 3 is a top plane view of the automotive engine mount of FIG. 1;
FIG. 4 is a right-side elevational view of the automotive engine mount of FIG. 1;
FIG. 5 is a front elevational view of a bracket fitting of the engine mount of FIG. 1;
FIG. 6 is a front elevational view of the bracket fitting of FIG. 5;
FIG. 7 is a left-side elevational view of the bracket fitting of FIG. 5;
FIG. 8 is a right-side elevational view of the bracket fitting of FIG. 5;
FIG. 9 is a front elevational view of a power unit mounting member of the automotive engine mount of FIG. 1;
FIG. 10 is a right-side elevational view of the power unit mounting member of FIG. 9;
FIG. 11 is a bottom plane view of the power unit mounting member of FIG. 9;
FIG. 12 is a cross sectional view taken along line 12-12 of FIG. 9;
FIG. 13 is a cross sectional view taken along line 13-13 of FIG. 9;
FIG. 14 is a top plane view of a cover member of the automotive engine mount of FIG. 1;
FIG. 15 is a bottom plane view of the cover member of FIG. 14;
FIG. 16 is a cross sectional view taken along line 16-16 of FIG. 14;
FIG. 17 is an enlarged cross sectional view showing a principle part of the engine mount of FIG. 1, taken along line 17-17 of FIG. 14; and
FIG. 18 is an enlarged cross sectional view showing another principle part of the engine mount of FIG. 1.

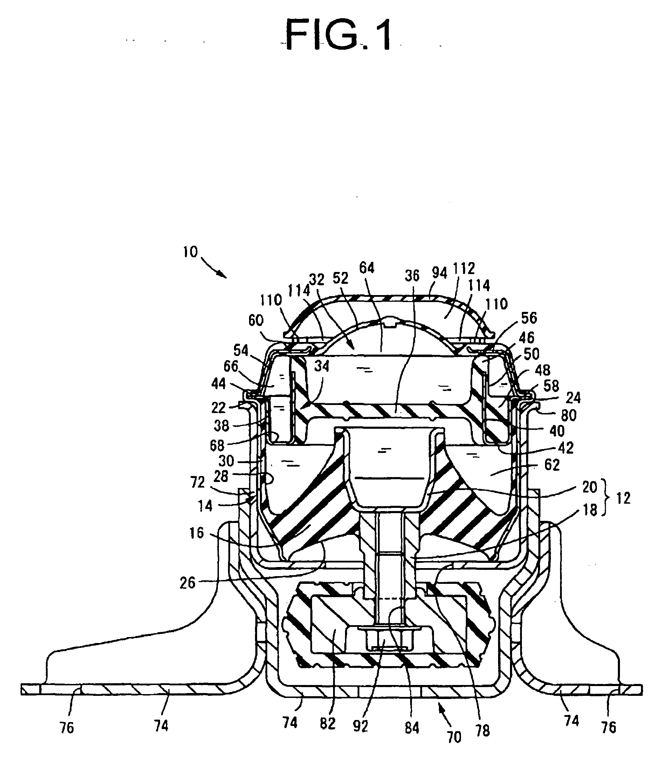

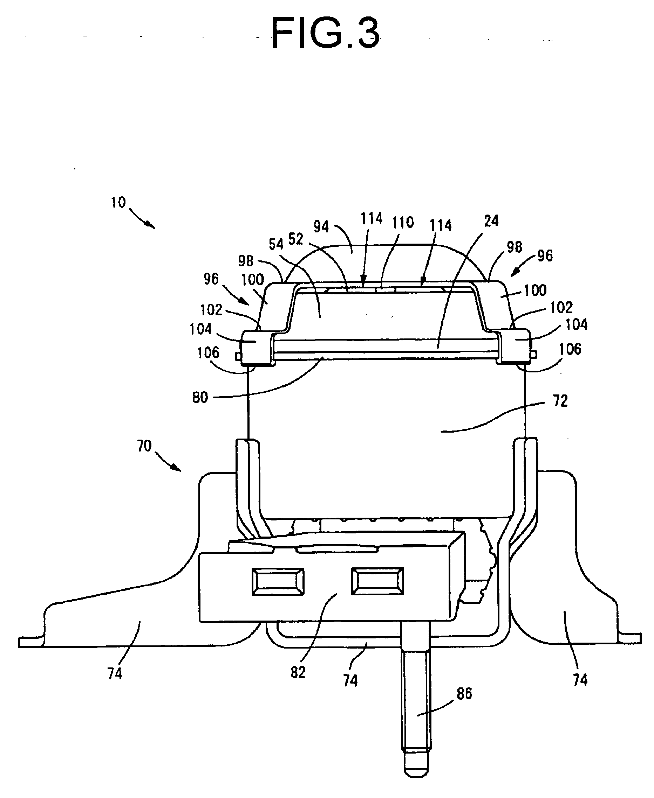

Referring first to FIGS. 1 through 4, there is depicted an automotive engine mount 10 by way of a first embodiment of the fluid filled type vibration damping device of the present invention. This automotive engine mount 10 has a structure in which a first mounting member 12 of metal and a second mounting member 14 of metal are linked by a main rubber elastic body 16. The first mounting member 12 is mounted onto the power unit side, while the second mounting member 14 is mounted onto the vehicle body side, whereby the power unit is supported in vibration damped manner on the body by being suspended therefrom.

In FIGS. 1 to 4, the engine mount 10 is shown in itself prior to being installed in the automobile. With the engine mount 10 installed on an automobile, the distributed support load of the power unit resulting from suspension of the power unit will be input in the axial direction of the mount (the vertical in FIG. 1) thereby causing the first mounting member 12 and the second mounting member 14 to undergo relative displacement in the direction away from each other in the axial direction, and causing the main rubber elastic body 16 to experience elastic deformation. In this installed state, the principal vibration targeted for damping will be input approximately along the axial direction of the mount. Unless noted otherwise, the vertical direction herein refers to the vertical direction in FIG. 1, which is also the axial direction of the mount.

To describe in detail, the first mounting member 12 includes a tubular fastening fitting 18 and dish-shaped cup fitting 20 which opens upward. The cup fitting 20 is fastened with its center base portion juxtaposed against the upper end section of the fastening fitting 18. A screw thread is provided on the inner peripheral wall of this fastening fitting 18.

The second mounting member 14, on the other hand, has a large-diameter, generally round tubular shape, and at its lower end has a taper of gradually decreasing diameter towards the bottom. In the upper part of the second mounting member 14 there is formed an annular shoulder portion 22 that flares diametrically outward, and on the outside peripheral edge portion of the shoulder portion 22 there is integrally formed a large-diameter swaging portion 24 that rises upward.

The second mounting member 14 is positioned spaced apart in the diametrical direction to the outside of the first mounting member 12, with the two members 12, 14 aligned approximately concentrically. The main rubber elastic body 16 is positioned between the diametrically opposed faces of the first mounting member 12 and the second mounting member 14.

The main rubber elastic body 16 has a thick-walled, generally round tubular shape and is bonded by vulcanization at its outside peripheral face to the inner peripheral face of the second mounting member 14 so as to extend from the axially medial section to the lower end thereof. Furthermore, the inner peripheral face of the main rubber elastic body 16 is bonded by vulcanization to the outside peripheral face of the fastening fitting 18 from the axially medial section to the upper part thereof and to the outside peripheral face of the cup fitting 20. That is, the main rubber elastic body 16 is constituted as an integrally vulcanization molded component which incorporates the first mounting member 12 and the second mounting member 14. The first mounting member 12 and the second mounting member 14 are thereby linked elastically by the main rubber elastic body 16, and the opening at the lower end of the second mounting member 14 is covered fluid-tightly by the main rubber elastic body 16 and the first mounting member 12.

At the lower end face of the main rubber elastic body 16 there is formed a lightening recess 26 opening with concave contours between the lower opening of the second mounting member 14 and the lower end of the first mounting member 12, thereby alleviating stress at the lower end section of the main rubber elastic body 16. An outside peripheral slot 28 is formed in the outside peripheral section of the main rubber elastic body 16. The outside peripheral slot 28 extends continuously in the circumferential direction with a cross section which opens with concave contours between the upper opening of the second mounting member 14 and the upper opening of the cup fitting 20 in the first mounting member 12. Also, a thin seal rubber layer 30 that is integrally formed with the main rubber elastic body 16 sheaths approximately the entire inner peripheral face of the second mounting member 14 from its axially medial section to the shoulder portion 22.

A partition member 32 is attached to the integrally vulcanization molded component of the main rubber elastic body 16 incorporating the first and second mounting members 12, 14. The partition member 32 includes an orifice fitting 34 of metal and a movable rubber film 36.

The orifice fitting 34 takes the form of two, i.e. a larger and a smaller, portions of differing diameter dimensions, namely, a large-diameter tubular portion 38 and a small-diameter tubular portion 40 disposed concentrically and spaced apart by a prescribed distance in the diametrical direction, with the lower end sections of the two tubular portions 38, 40 being connected by an annular plate 42 thereby giving the fitting a convex cross section which is open at the top and extends continuously in the circumferential direction. In the present embodiment, the fitting is formed from iron, aluminum, aluminum alloy or other metal material, but could instead be formed from hard synthetic resin material or the like. In particular, the height dimension of the small-diameter tubular portion 40 of the orifice fitting 34 is greater than the height dimension of the large-diameter tubular portion 38. A flanged portion 44 of annular plate shape projects diametrically outward at the upper end of the large-diameter tubular portion 38.

The movable rubber film 36, which is of generally round disk shape and consists of elastomer material, is disposed to the inside of the orifice fitting 34, with the edge face of the movable rubber film 36 bonded by vulcanization to the inner peripheral face in the axially medial section of the small-diameter tubular portion 40 of the orifice fitting 34. That is, the movable rubber film 36 is constituted as an integrally vulcanization molded component which incorporates the orifice fitting 34, and is supported in an elastically deformable manner with respect to the fitting 34.

A rubber seal 46 of annular shape integrally formed with the movable rubber film 36 projects upward at the upper end section of the small-diameter tubular portion 40 of the orifice fitting 34, while a rubber filler 48 integrally formed with the movable rubber film 36 and with the rubber seal 46 is disposed within an annular zone between the diametrically opposed faces of the small-diameter tubular portion 40 and the large-diameter tubular portion 38 of the orifice fitting 34. The rubber filler 48 is bonded by vulcanization at its outside peripheral face to the outside peripheral face of the small-diameter tubular portion 40, to the inner peripheral face of the large-diameter tubular portion 38, and to the upper face of the annular plate 42; and extends for a prescribed length in the circumferential direction (in the present embodiment, just short of once around the circumference) so as to fill this annular zone. The upper edge face of the rubber filler 48 has a generally flat contour and is positioned either at approximately the same height as the upper face of the flanged portion 44 of the orifice fitting 34, or with the outside peripheral section of its upper edge face covering the upper face of the flanged portion 44. Also, while not shown explicitly in the drawings, part of the rubber filler 48 projects upward and is bonded by vulcanization to the outside peripheral face of the small-diameter tubular portion 40 from its axially medial section to the upper edge and is integrally formed with the outside peripheral section of the rubber seal 46, thereby filling for a prescribed length in the circumferential direction a zone which is situated diametrically outward from the small-diameter tubular portion 40 and the rubber seal 46 at a location outward from the top part of the area between the diametrically opposing faces of the large-diameter tubular portion 38 and the small-diameter tubular portion 40. Thus, in a zone situated diametrically outward from the small-diameter tubular portion 40 and the rubber seal 46 and extending between the diametrically opposing faces of the large-diameter tubular portion 38 and the small-diameter tubular portion 40 of the orifice fitting 34, a circumferential groove 50 which extends in a helical pattern for a prescribed distance in the circumferential direction will be defined by that part of the zone which is not filled by the rubber filler 48.

The partition member 32 of the above design is inserted through the upper opening of the second mounting member 14, and the large-diameter tubular portion 38 of the orifice fitting 34 of the partition member 32 is then fastened fitting within the second mounting member 14 via the intervening seal rubber layer 30 on the inside of the second mounting member 14. The flanged portion 44 of the orifice fitting 34 is juxtaposed in the axial direction against the shoulder portion 22 of the second mounting member 14, thereby defining the internal fitting location (fastening location) of the partition member 32 relative to the second mounting member 14. The second mounting member 14 is also provided with a diaphragm 52 as the flexible rubber film.

The diaphragm 52 is composed of a thin, readily deformable rubber film and has a distended upwardly convex, generally circular dome shape. An annular fastening fitting 54 is provided to the outside peripheral edge portion of the diaphragm 52.

The annular fastening fitting 54 has generally round tubular shape which is tapered so as to gradually decrease in diameter dimension going from the bottom to the top, and is formed from iron, aluminum, aluminum alloy or other metal material. At the upper end section of the annular fastening fitting 54 there is integrally formed an inward flange portion 56 that extends diametrically inward; and at the lower end section of the annular fastening fitting 54 there is integrally formed a swage fastening portion 58 of outside flange shape that extends diametrically outward. In the present embodiment in particular, with regard to the width dimension extending in the diametrical direction, the dimension of the swage fastening portion 58 will be the same as or slightly smaller than that of the flanged portion 44 of the orifice fitting 34, whereas the dimension of the inward flange portion 56 will be sufficiently larger than that of the swage fastening portion 58. Also, the inside diameter dimension of the inward flange portion 56 will be smaller than the diameter dimension of the small-diameter tubular portion 40 of the orifice fitting 34. The inner peripheral edge portion of the inward flange portion 56 is bent so as to lift slightly upward. This annular fastening fitting 54 is advantageously produced through press working of a thin disk of sheet metal, for example. The outside peripheral edge portion of the diaphragm 52 is bonded by vulcanization to the inner peripheral edge portion of the inward flange portion 56, whereby the diaphragm 52 is constituted as an integrally vulcanization molded component which incorporates the annular fastening fitting 54, and is supported in an elastically deformable manner with respect to the annular fastening fitting 54.

With the exception of the swage fastening portion 58, the inside and outside peripheral faces of the annular fastening fitting 54 are sheathed approximately entirely by a rubber layer that is integrally formed with the diaphragm 52. In particular, the relatively thick rubber layer which covers the upper face of the inward flange portion 56 serves as a rubber sheath layer 60 in the present embodiment. In the embodiment, the rubber sheath layer 60 extends with generally unchanging cross section in the circumferential direction at the outside face of the inward flange portion 56 which has been integrally disposed at the inner peripheral edge portion of the annular fastening fitting 54. The upper face of the rubber sheath layer 60 has a flat contour extending approximately parallel to the inward flange portion 56.

The diaphragm 52 which incorporates this annular fastening fitting 54 is inserted in the axial direction from the upper opening of the second mounting member 14. The swage fastening portion 58 of the annular fastening fitting 54 is then positioned accommodated to the inside of the swaging portion 24 of the second mounting member 14 and is juxtaposed in the axial direction against the flanged portion 44 of the orifice fitting 34 which, ahead of the swage fastening portion 58, is already accommodated in the swaging portion 24 and juxtaposed against the shoulder portion 22. The swaging portion 24 is then subjected to a swaging process to fasten the flanged portion 44 and the swage fastening portion 58 to the second mounting member 14. With this arrangement, the partition member 32 and the diaphragm 52 are fastened to the main rubber elastic body 16 integrally vulcanization molded component which incorporates the first mounting member 12 and the second mounting member 14, and the upper opening of the second mounting member 14 is closed off fluid-tightly by the partition member 32 and the diaphragm 52.

Specifically, one of the openings (at bottom in FIG. 1) of the second mounting member 14 is closed off fluid-tightly by the main rubber elastic body 16, while the other opening (at top in FIG. 1) of the second mounting member 14 is closed off fluid-tightly by the diaphragm 52, thereby defining a fluid chamber filled with a non-compressible fluid. By then dividing the fluid chamber with the partition member 32 which has been fixedly supported on the second mounting member 14, there will be formed to one side of the partition member 32 (the lower side in FIG. 1) a pressure receiving chamber 62 a portion of whose wall is defined by the main rubber elastic body 16 and which gives rise to pressure fluctuations based on elastic deformation of the main rubber elastic body 16. To the other side of the partition member 32 (the upper side in FIG. 1) there will be formed an equilibrium chamber 64 a portion of whose wall is defined by the diaphragm 52 and which readily allows changes in volume based on elastic deformation of the diaphragm 52. The non-compressible fluid filling the pressure receiving chamber 62 and the equilibrium chamber 64 can be water, an alkylene glycol, a polyalkylene glycol, or silicone oil, for example; in order to effectively achieve vibration damping action based on flow effects such as the resonance effect of the fluid it will be especially preferable to use a low-viscosity fluid of 0.1 Pa • s or lower. Filling the pressure receiving chamber 62 and the equilibrium chamber 64 with the non-compressible fluid within may be accomplished advantageously, for example, by assembling the partition member 32 and the diaphragm 52 to the integrally vulcanization molded component of the main rubber elastic body 16 which incorporates the first and second mounting members 12, 14 with these components submerged in the non-compressible fluid.

With the flanged portion 44 of the orifice fitting 34 and the swage fastening portion 58 of the annular fastening fitting 54 fastened through swaging to the swaging portion 24 of the second mounting member 14, the upper end section of the small-diameter tubular portion 40 of the orifice fitting 34 will be juxtaposed in the axial direction against the inner peripheral edge portion and diametrically medial section of the inward flange portion 56 of the annular fastening fitting 54 via the intervening rubber layer on the lower face of the inward flange portion 56 and the rubber seal 46 of the orifice fitting 34. Through the swage fastening operation, at least one of the inward flange portion 56 and the small-diameter tubular portion 40 undergo displacement in the direction approaching the other in the axial direction, thereby inducing compressive deformation in the axial direction of the rubber layer and the rubber seal 46 situated between the inward flange portion 56 and the small-diameter tubular portion 40. Thus, the inward flange portion 56 and the small-diameter tubular portion 40 will be positioned juxtaposed in intimate contact with one another in the axial direction, and the opening of the circumferential groove 50 of the orifice fitting 34 will become closed off fluid-tightly by the annular fastening fitting 54. With this arrangement, the inner peripheral face of the annular fastening fitting 54, in cooperation with the walls of the circumferential groove 50, will define an orifice passage 66 extending in a helical pattern for a prescribed length in the circumferential direction through the outside peripheral section of the partition member 32. A first end of the orifice passage 66 connects with the pressure receiving chamber 62 through a communication window 68 that perforates the annular plate 42 of the orifice fitting 34 in the axial direction, while the other end of the orifice passage 66 connects with the equilibrium chamber 64 through a communication window (not shown) that perforates the small-diameter tubular portion 40 of the orifice fitting 34 and the rubber seal 46 in the diametrical direction. The pressure receiving chamber 62 and the equilibrium chamber 64 thereby communicate with one another through the orifice passage 66, allowing fluid flow between the two chambers 62, 64 through the orifice passage 66.

The resonance frequency of fluid induced to flow through this orifice passage 66 will be tuned such that, for example, on the basis of the resonance effect of the fluid effective vibration damping action (high attenuating action) will be produced against vibration in a low frequency range of around 10 Hz corresponding to engine shake or the like. It is possible for tuning of the orifice passage 66 to be carried out, for example, through appropriate adjustment of the passage length and the passage cross sectional area of the orifice passage 66 in consideration of the spring rigidity of the walls of the pressure receiving chamber 62 and the equilibrium chamber 64, i.e. to characteristic values based on levels of elastic deformation of the main rubber elastic body 16 and of the diaphragm 52 corresponding to levels of pressure change necessary to induce a unit change in volume in the chambers 62, 64. Generally, the tuning frequency of the orifice passage 66 may be understood to be the frequency at which the phase of pressure fluctuations transmitted through the orifice passage 66 changes and a resonance state occurs.

Pressure in the pressure receiving chamber 62 will be exerted on one of the faces (the lower face in FIG. 1) of the movable rubber film 36 of the partition member 32, while pressure in the equilibrium chamber 64 will be exerted on the other face (the upper face in FIG. 1) of the movable rubber film 36. Specifically, with the movable rubber film 36 fixedly supported on the second mounting member 14 and the annular fastening fitting 54 via the orifice fitting 34, the movable rubber film 36 will experience elastic deformation based on the pressure differential between the pressure receiving chamber 62 and the equilibrium chamber 64, thereby constituting a pressure fluctuation absorbing mechanism for absorbing pressure fluctuations of the pressure receiving chamber 62. In the present embodiment in particular, the characteristic frequency of the movable rubber film 36 is tuned so that, for example, during input of vibration in a medium frequency range on the order of 20 to 40 Hz which corresponds to idling vibration, low-speed rumble and the like, vibration damping action (vibration isolating action through low dynamic spring) will be produced effectively on the basis of the pressure receiving chamber 62 pressure fluctuation absorbing action afforded by elastic deformation of the movable rubber film 36.

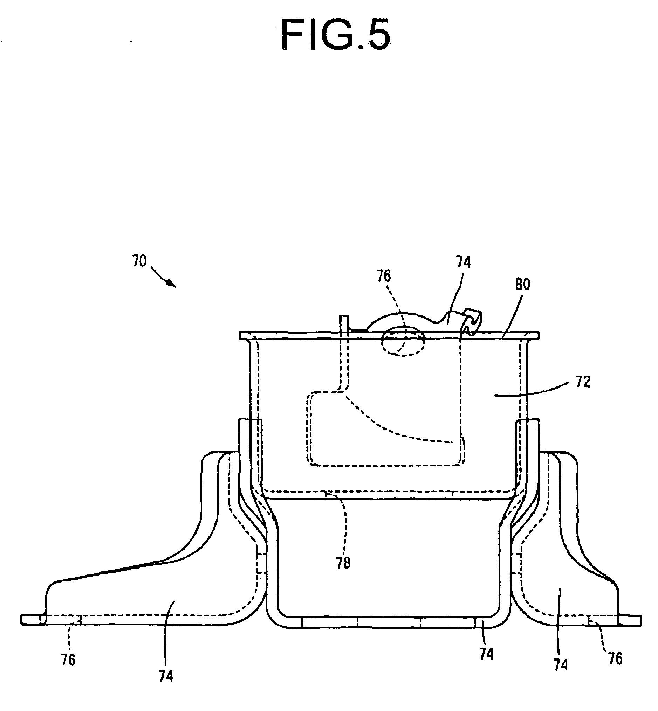

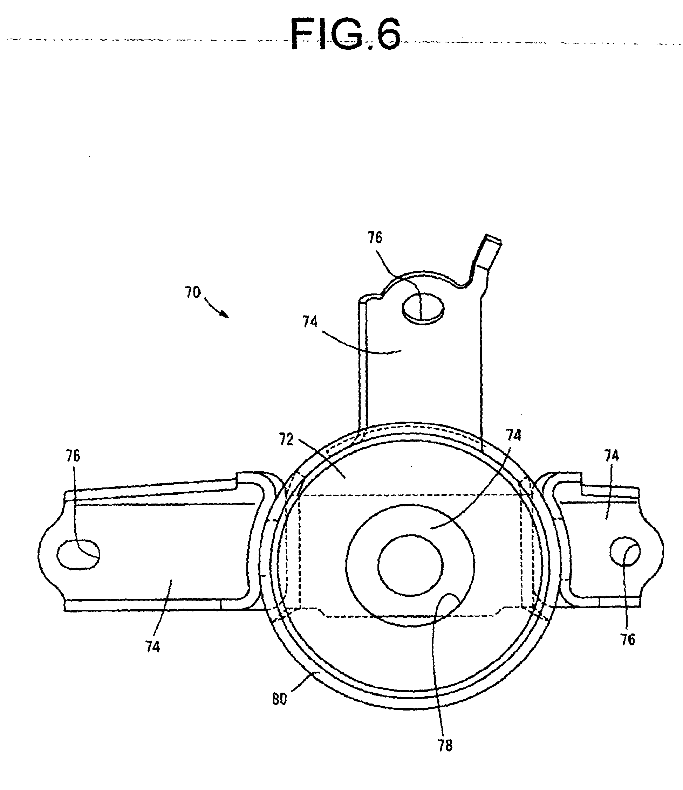

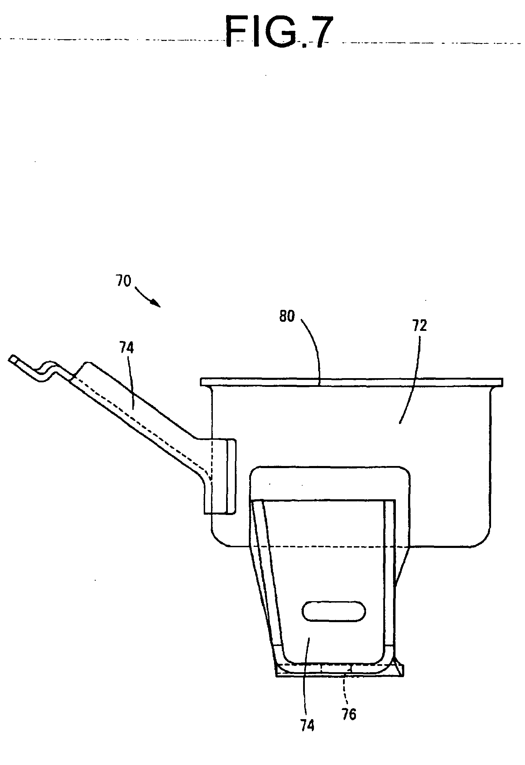

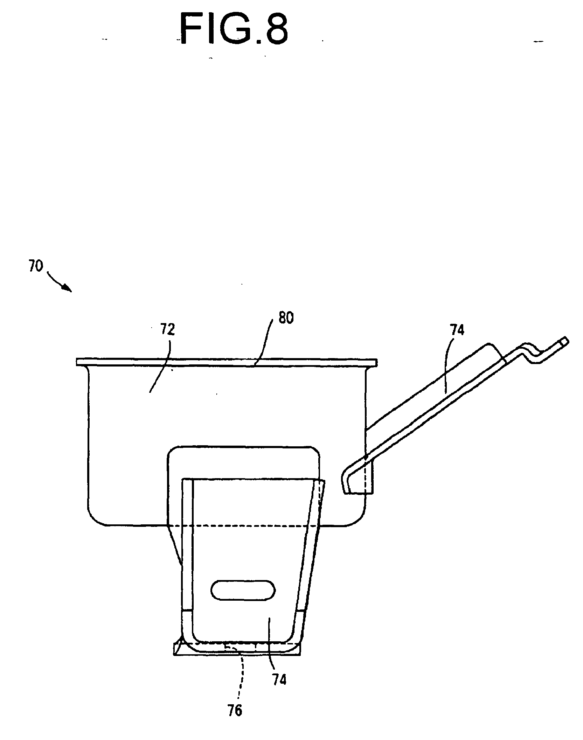

A bracket fitting 70 of metal is attached to the second mounting member 14. As shown in FIGS. 5 to 8, the design of the bracket fitting 70 includes a cup-shaped portion 72 of generally bottomed round cylindrical shape, and a plurality of leg portions 74 affixed with welds, bolts, or the like to the outside face of the cup-shaped portion 72. If needed, bolt passage holes 76 permitting passage of bolts for fastening to a component on the vehicle body side (not shown) may be bored in the leg portions 74. The number and shape of these leg portions 74, as well as the fastening location of the cup-shaped portion 72 and other design aspects, may be modified appropriately with reference to the available installation space in the automobile, the required level of mounting stability onto body-side components, ease of fabrication, and other considerations. A passage hole 78 of a shape sufficiently larger than the outside diameter dimension of the fastening fitting 18 of the first mounting member 12 is bored through the center of the base wall of the cup-shaped portion 72. An outside flange portion 80 which projects diametrically outward as a projecting section is integrally formed along the rim of the opening of the cup-shaped portion 72. The outside diameter dimension of the outside flange portion 80 is larger than the outside diameter dimension of the shoulder portion 22 of the second mounting member 14.

The second mounting member 14 is secured force-fitted into this bracket fitting 70 through the opening section of the cup-shaped portion 72, while the fastening fitting 18 of the first mounting member 12 is passed through the passage hole 78 in the base of the cup-shaped portion 72 so as to be positioned jutting out below the base. In the present embodiment in particular, the lower part of the second mounting member 14 has a tapered shape of progressively decreasing diameter dimension towards the bottom, thereby affording smooth movement in the force fitting direction (axial direction of the mount) when the second mounting member 14 is secured by force fitting into the bracket fitting 70. Also, through abutment of the lower end section of the second mounting member 14 against the base of the cup-shaped portion 72 in the axial direction, in association with abutment of the shoulder portion 22 of the second mounting member 14 against the outside flange portion 80 in the axial direction, there will be constituted an abutting mechanism defining the terminal location for force-fitting the second mounting member 14 into the bracket fitting 70.

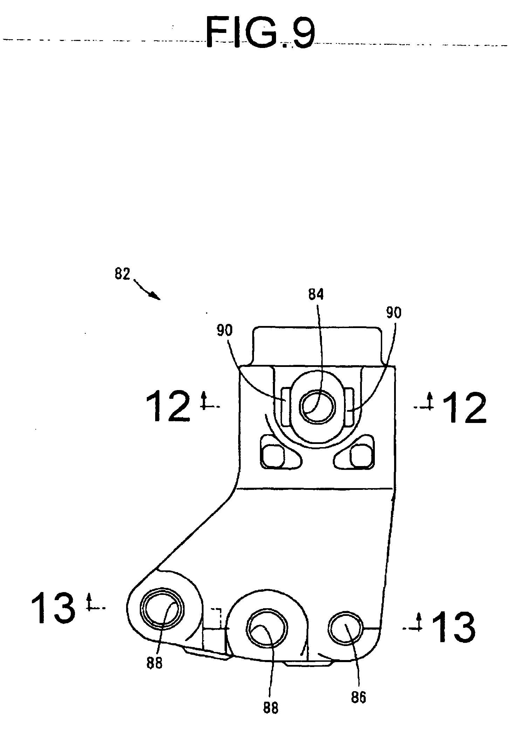

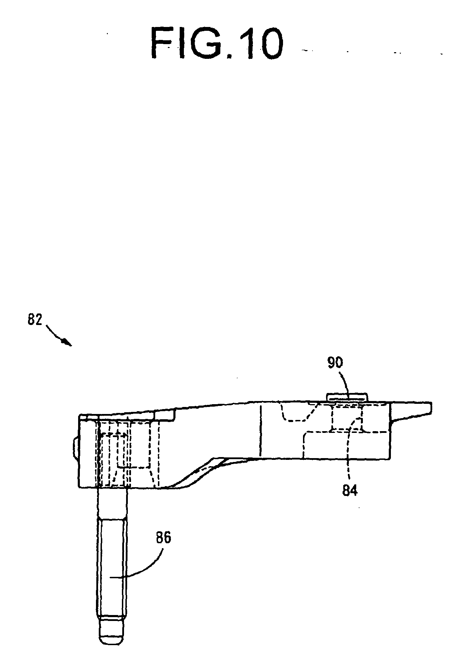

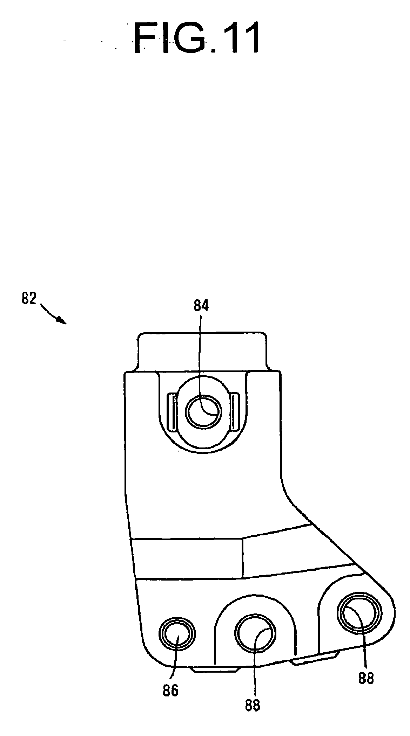

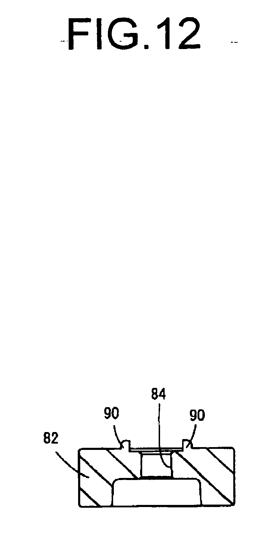

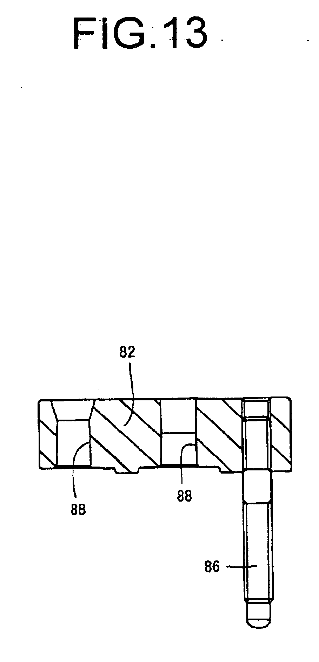

A power unit mounting member 82 is attached to the first mounting member 12. As shown in FIGS. 9 to 13, the power unit mounting member 82 has an elongated, generally oblong plate shape. A bolt passage hole 84 is bored in the thickness direction (the vertical in FIG. 10) through one lengthwise end (at top in FIG. 9) of the power unit mounting member 82, while at the other lengthwise end (at bottom in FIG. 10), a fastening bolt 86 is disposed projecting downward and a plurality of bolt passage holes 88 (in the present embodiment, two) are bored in the thickness direction, with the fastening bolt 86 and the bolt passage holes 88 being lined up in a row in the lateral width direction (left to right in FIG. 9). A pair of positioning projections 90, 90 having shapes corresponding to the double-sided shape of the fastening fitting 18 of the first mounting member 12 project upward at the periphery of the bolt passage hole 84 situated at one lengthwise end.

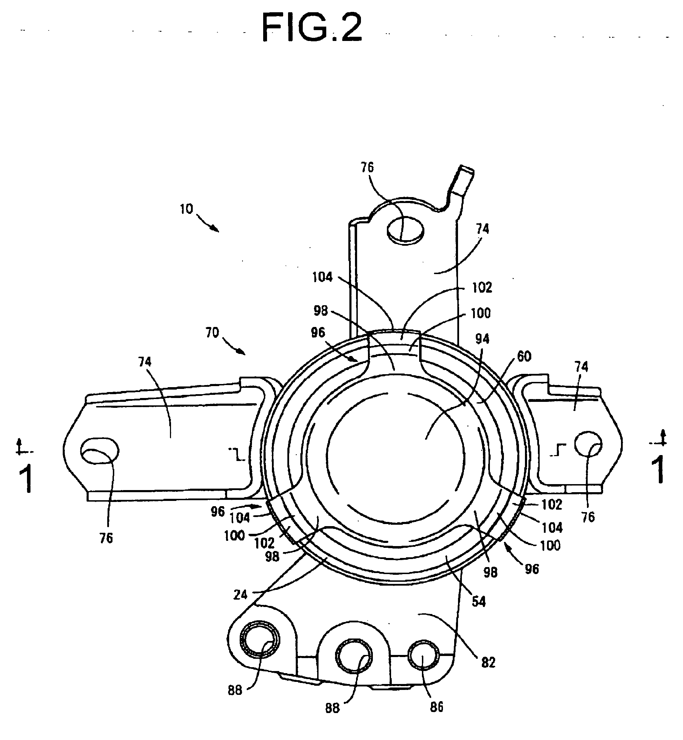

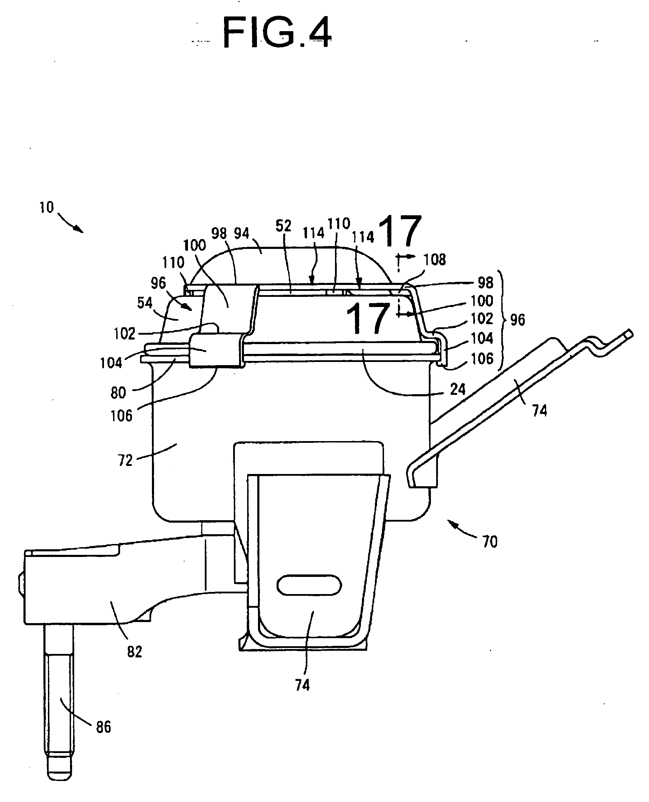

One lengthwise end (the top end in FIG. 9) of this power unit mounting member 82 is slipped between the leg portions 74 of the bracket fitting 70, while the lower end of the fastening fitting 18 of the first mounting member 12 which projects down from the cup-shaped portion 72 of the bracket fitting 70 is slipped between the opposed faces of the pair of positioning projections 90, 90 and juxtaposed against the peripheral edge portion of the bolt passage hole 84. The fastening bolt 92 is then passed through the bolt passage hole 84 from below and screw-fastened to the fastening fitting 18, whereby the power unit mounting member 82 is fastened to the first mounting member 12, with the other lengthwise end (the lower end in FIG. 9) where the fastening bolt 86 etc. are disposed on the power unit mounting member 82 extending outward in the axis-perpendicular direction from the first mounting member 12 (downward in FIG. 2 or to the left in FIG. 4).

The fastening bolt 86 of the power unit mounting member 82 is then screw-fastened to a component on the power unit side (not shown), and fastening bolts (not shown) are passed through the bolt passage holes 88, 88 and screw-fastened to the component on the power unit side, thereby securing the first mounting member 12 to the power unit side via the power unit mounting member 82. Additionally, fastening bolts (not shown) are passed through the bolt passage holes 76 in the leg portions 74 of the bracket fitting 70 and screw-fastened to a component on the vehicle body side, thereby securing the second mounting member 14 to the vehicle body side via the bracket fitting 70. The automotive engine mount 10 is thereby interposed between the power unit and the vehicle body to provide vibration damped linkage between them. In particular, by installing the engine mount 10 in an automobile with the axial direction of the mount extending approximately in the plumb vertical direction, the distributed support load of the power unit will bear approximately in the axial direction of the mount, and the engine mount 10 will be supported suspended from the body.

With the automotive engine mount 10 having the above structure installed in an automobile, input of vibration in a low frequency range, such as engine shake which can become a problem during driving, will give rise to relatively large pressure fluctuations in the pressure receiving chamber 62. Since this pressure is high, the pressure of the pressure receiving chamber 62 is substantially not absorbable by the movable rubber film 36, which has been tuned to very small amplitude. Consequently, sufficient flow of fluid through the orifice passage 66 will be effectively assured through the relative pressure differential produced between the pressure receiving chamber 62 and the equilibrium chamber 64; and effective vibration damping (high attenuating action) of vibration in a low frequency range such as engine shake will be achieved on the basis of flow effects such as the resonance effect of fluid through the orifice passage 66.

Meanwhile, input of vibration in a medium frequency range, such as idling vibration that can present a problem with the vehicle at a stop, or low-speed rumble that can present a problem during driving, will give rise to small-amplitude pressure fluctuations in the pressure receiving chamber 62. Since the frequency range of this vibration is higher than the tuning frequency of the orifice passage 66, the orifice passage 66 will experience an appreciable rise in fluid flow resistance due to anti-resonance effects and will become substantially blocked off. At this point, the pressure fluctuations of the pressure receiving chamber 62 will be absorbed on the basis of elastic deformation of the movable rubber film 36 which has been tuned to the medium frequency range in question, thereby avoiding development of very high dynamic spring due to the orifice passage 66 becoming substantially blocked off. For this reason, good vibration damping action (vibration insulating action based on a low dynamic spring characteristic) of vibration in the medium frequency range will be achieved.

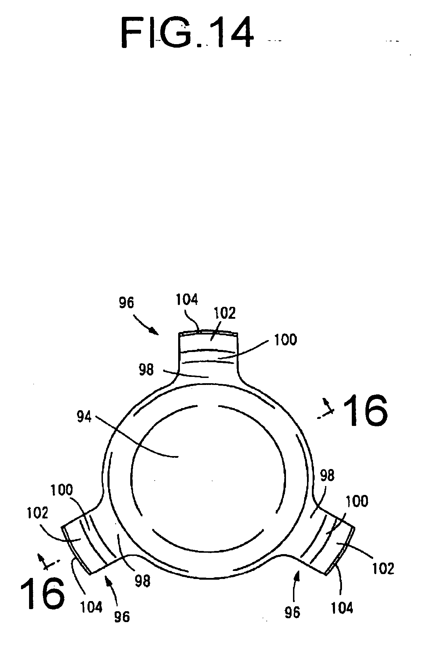

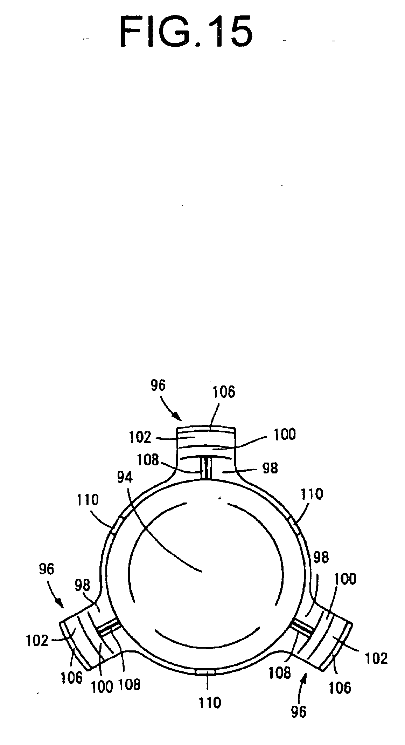

The cover member 94 is attached to the second mounting member 14 so as to cover the diaphragm 52 from above. As shown in FIGS. 14 to 16, the cover member 94 has a shallow, generally circular inverted cup shape whose center section has a generally flat disk shape and which curves so as to become gradually larger in diameter towards the outside peripheral edge portion from the center section. In other words, the cover member 94 has a generally circular dome shape which bulges upward. The peripheral edge portion of the opening (outside peripheral edge portion) situated at the lower side of the cover member 94 has an outside flange shape which flares diametrically outward, so that the wall thickness in this opening peripheral edge portion is greater than the wall thickness in other areas. The cover member 94 can be formed, for example, by press working of a metal material; however, in consideration of the required manufacturing cost, elasticity, corrosion resistance and other factors, it could also be produced by molding of a synthetic resin material.

A plurality of catch pieces 96 (three in the present embodiment) are disposed along the outside peripheral edge portion of the cover member 94. The catch pieces 96 have a generally stepped plate shape extending outward from the outside peripheral edge portion of the cover member 94 and are composed of a top plate portion 98, a medial plate portion 100, a stepped portion 102, and a bottom plate portion 104, with a catch portion 106 being formed at the projecting distal end of the bottom plate portion 104.

The top plate portion 98 is of generally flat plate shape extending diametrically outward from the outside peripheral edge portion of the cover member 94, and extends approximately parallel to the disk shaped portion in the center section of the cover member 94.

The medial plate portion 100 extends downward from the diametrically outward projecting distal end of the top plate portion 98, and as it descends slopes diametrically outward with respect to the center axis of the cover member 94. In particular, the slope angle of the medial plate portion 100 with respect to the center axis of the cover member 94 is approximately the same as the taper angle of the annular fastening fitting 54 which has been bonded by vulcanization to the diaphragm 52.

The stepped portion 102 has a generally flat plate shape extending diametrically outward from the bottom projecting distal end of the medial plate portion 100, and extends approximately parallel to the top plate portion 98 and the disk shaped portion in the center section of the cover member 94.

The bottom plate portion 104 has a generally flat plate shape extending downward from the diametrically outward projecting distal end of the stepped portion 102, and extends approximately parallel to the center axis of the cover member 94. The catch portion 106, which is bowed diametrically inward, is formed at the bottom projecting distal edge of this bottom plate portion 104. That is, the bottom plate portion 104 and the catch portion 106 cooperatively have a generally "L" shaped cross section.

The connecting section of the top plate portion 98 with the medial plate portion 100, and the connecting sections of the stepped portion 102 with the medial plate portion 100 and with the bottom plate portion 104, have bowing shapes so as to protrude diametrically outward, so that the zones to either side of each connecting section connect smoothly. The catch piece 96 inclusive of the top and bottom plate portions 98, 104, the medial plate portion 100, and the stepped portion 102 has a plate shape which is bowed along the circumferential of the cover member 94.

In the present embodiment in particular, the three catch pieces 96, 96, 96 are identical in terms of shape, size, structure and so on, and these three catch pieces 96, 96, 96 are disposed at equal intervals at the outside peripheral edge portion of the cover member 94. Specifically, the circumferential length dimension of each catch piece 96 is set to a prescribed length smaller than the circumference of the outside peripheral edge portion of the cover member 94 (e.g. length equivalent to 1/20 to 1/4 the circumference of the outside peripheral edge portion), with the catch pieces 96 being spaced approximately identical distances apart from one another in the circumferential direction.

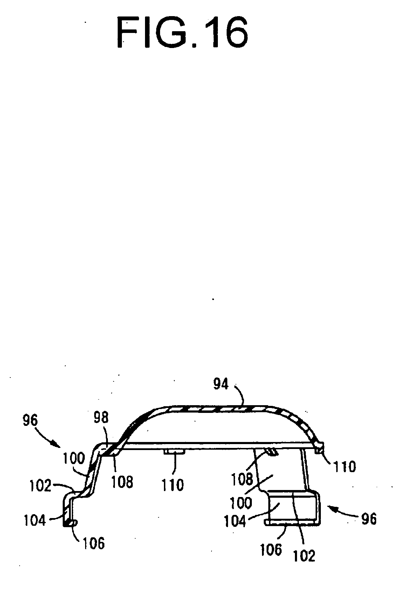

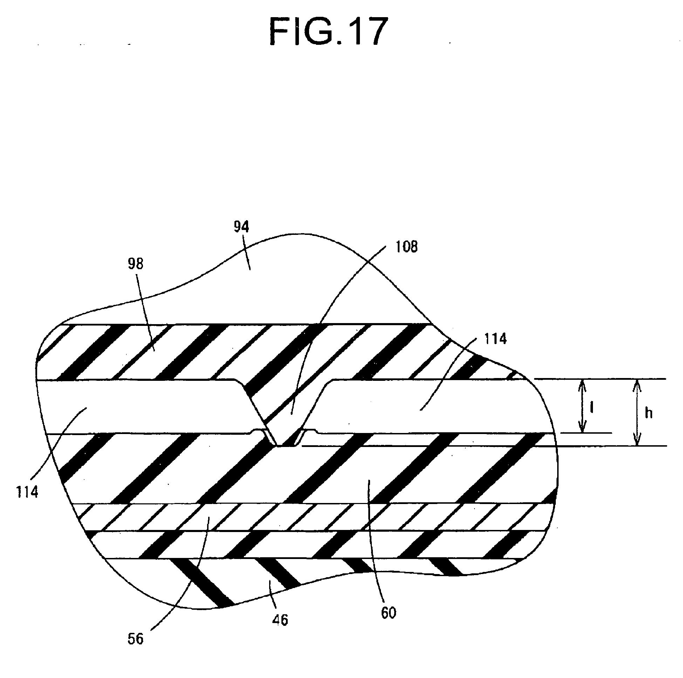

In the approximately center section in the circumferential direction of each of these catch pieces 96 there is disposed a contacting projection 108 that projects axially downward in FIG. 16, i.e. from the inner side of the cover member 94. As shown in FIG. 17, the contacting projection 108 has a projecting cross section of inverted triangle shape, specifically, a tapering shape with narrowing width going downward from the bottom face of the top plate portion 98, and extending continuously in a straight line between the outside peripheral edge portion of the cover member 94 and the connecting section of the top plate portion 98 with the medial plate portion 100 in the catch piece 96. In particular, the contacting projection 108 extends in the diametrical direction of the cover member 94. In the present embodiment, the projecting distal edge section of the contacting projection 108 has a flat contour of narrow width, and extends parallel to the top plate portion 98 of the catch piece 96. However, it is not mandatory that the contacting projection 108 have a flat distal edge; it may instead have a sharp edged shape or a rounded shape of appropriate curvature for example. Furthermore, as the plurality (three in the present embodiment) of contacting projections 108 are formed in the circumferential center section of each catch piece 96, they are situated at equal intervals about the circumference of the cover member 94 and extending diametrically outward from the outside peripheral edge portion of the cover member 94.

Spacer projecting portions 110 are formed in the approximate center of sections between catch pieces 96 in the circumferential direction at the outside peripheral edge portion of the cover member 94. Each spacer projecting portion 110 has generally oblong block shape with elongated extension in the circumferential direction of the cover member 94, and projects a prescribed height downward from the outside peripheral edge portion of the cover member 94. The height dimensions of the contacting projections 108 and of the spacer projecting portions 110 will be described later when discussing attachment of the cover member 94 to the second mounting member 14. The distal edge face of the spacer projecting portion 110 in the direction of projection has a flat, generally oblong shape extending parallel to the top plate portion 98 of the catch piece 96, and sufficiently larger size than the flat face of projecting edge section of the contacting projections 108 discussed previously. However, it is not mandatory that the spacer projecting portion 110 have a flat distal edge. It may instead have a sharp edged shape or a rounded shape of appropriate curvature, for example. Furthermore, as the plurality (three in the present embodiment) of spacer projecting portions 110 are formed in the approximate center of sections between catch pieces 96 in the circumferential direction, they are situated at equal intervals about the circumference of the cover member 94.

To recapitulate, at the outside peripheral edge portion of the cover member 94 according to the present embodiment, the spacer projecting portions 110 and the catch pieces 96 furnished with contacting projections 108 are arranged in alternating fashion in the circumferential direction, with all adjacently situated catch pieces 96 and spacer projecting portions 110 spaced apart by approximately the same distance. Also, the cover member 94, the catch pieces 96, the contacting projections 108, and the spacer projecting portions 110 are composed of an integrally molded component of synthetic resin material.

In the present embodiment in particular, as the cover member 94 and the catch pieces 96 have larger contours than do the contacting projections 108 and the spacer projecting portions 110, and are moreover formed of relatively thin synthetic resin material, they will be endowed with moderately high elasticity. As such, the catch pieces 96 which have been integrally formed at the outside peripheral edge portion of the cover member 94 are capable of deformation in association with elastic deformation of the cover member 94; in particular, as the center section of the cover member 94 yields in such a way as to bulge downward the outside peripheral edge portion of the cover member 94 will deform and curl upward, and in association with this deformation the connecting section of the top plate portion 98 and the medial plate portion 100 of the catch piece 96 will deform and uplift, making it possible for a zone extending from the medial plate portion 100 to the catch portion 106 at the distal edge to undergo deformation and splay diametrically outward. Of course, in the catch piece 96, sections further away from the outside peripheral edge portion of the cover member 94 will be capable of elastic deformation independently of the cover member 94.

Meanwhile, the contacting projections 108 and the spacer projecting portions 110 are formed so as to project from the catch pieces 96 and the cover member 94 with smaller contours than do the catch pieces 96 and the cover member 94, and thus allow only a very low level of deformation.

The cover member 94 having the design described above may be attached to the second mounting member 14 by a procedure such as the following, for example.

First, with the center axis of the cover member 94 and the center axis of the engine mount 10 positioned on approximately the same line above the diaphragm 52, the cover member 94 is displaced in the axial direction towards the diaphragm 52 thereby inducing the catch portions 106 of the catch pieces 96 of the cover member 94 to surmount the outside flange portion 80 of the bracket fitting 70 in the axial direction, and positioning the lower edge face of the catch portions 106 below the lower edge face of the outside flange portion 80.

During this displacement of the cover member 94 in the axial direction, the inner peripheral edge portion of the catch portions 106 will be positioned diametrically inward from the outside peripheral edge portion of the outside flange portion 80, whereby the lower edge section of the catch portions 106 will be disposed in contact against the upper edge section of the outside flange portion 80; as the cover member 94 is pushed further along in the axial direction from this state of contact, the elasticity of the catch pieces 96 and the sloping action of the medial plate portion 100 of the catch pieces 96 will interact such that a zone extending from the medial plate portion 100 to the catch portion 106 of the catch piece 96 will undergo deformation and splay diametrically outward. Thus, while remaining in contact with the outside peripheral edge portion of the outside flange portion 80, the catch portions 106 will surmount the outside flange portion 80 in the axial direction, making it possible for the lower edge face of the catch portion 106 to now be positioned below the lower edge face of the outside flange portion 80.

Additionally, when, in association with deformation of the cover member 94 in the axial direction, the catch portion 106 surmounts the outside flange portion 80 in the axial direction thereby releasing the catch portion 106 and the outside flange portion 80 from their state of contact, the diametrically outward splaying elastic deformation of the catch pieces 96 will now be released as well, and the catch portion 106 will again be positioned at approximately its original location in the diametrical direction. Thus, with the catch portion 106 positioned below the outside flange portion 80 straddling it in the axial direction, the inner peripheral edge portion of the catch portion 106 will be positioned diametrically inward from the outside peripheral edge portion of the outside flange portion 80, and the upper edge section of the catch portion 106 will be juxtaposed in the axial direction against the lower edge section of the outside flange portion 80, thereby constituting a catch mechanism which engages the catch piece 96 (the catch portion 106) in a direction such that it is prevented from slipping off in the axial direction, i.e. upward in FIG. 1, from the outside flange portion 80.

As mentioned previously it is alternatively possible, prior to engaging the catch portions 106 with the outside flange portion 80, to depress downward the center section of the cover member 94 thereby inducing diametrical outward deformation of the catch pieces 96, and to then displace the cover member 94 in the axial direction while maintaining this state. By so doing, the catch portions 106 will be positioned straddling the outside flange portion 80 without the lower edge section of the catch portions 106 ever having come into contact with the outside flange portion 80; and with subsequent release of deformation of the catch pieces 96 in association with release of elastic deformation of the cover member 94, the catch portions 106 can be engaged with the outside flange portion 80.

With the three catch pieces 96, 96, 96 engaged by the outside flange portion 80, the contacting projection 108 disposed on each catch piece 96 will be juxtaposed in the axial direction against the rubber sheath layer 60 which sheaths the upper face of the annular fastening fitting 54. As shown in FIG. 17, in the engaged state a prescribed distance: 1 in the axial direction separates the rubber sheath layer 60 from the top plate portion 98 of the catch piece 96 which constitutes the basal end side of the contacting projection 108. The height dimension: h to which the contacting projection 108 projects in the axial direction from the top plate portion 98 is greater than this separation distance: 1, that is, h > 1. Also, the rubber sheath layer 60 is formed of thick elastomer material, while the contacting projections 108 are formed of small synthetic resin elements, and thus the allowable level of deformation of the rubber sheath layer 60 will be sufficiently greater than the allowable level of deformation of the contacting projections 108. Thus, the contacting projections 108 will be pressed against the rubber sheath layer 60 so as to dig into it in the axial direction to a depth of axial dimension equivalent to (h - 1), thereby inducing compressive deformation of the rubber sheath layer 60 in the axial direction. In particular, as the contacting projections 108 have a tapered edge and a small projecting distal edge face, the sections of the rubber sheath layer 60 contacted by the contacting projections 108 will undergo localized compressive deformation. Owing to this deformation, the elasticity of the rubber sheath layer 60 will be exerted on the catch pieces 96, inducing upward displacement of the catch pieces 96 and thereby urging together the catch portions 106 and the outside flange portion 80 in the axial direction so that they become juxtaposed in intimate contact, producing a high level of engaging force (abutting force of the catch pieces 96 and outside flange portion 80 in the axial direction) which acts in a direction preventing the catch pieces 96 from slipping off the outside flange portion 80 in the axial direction (upward in FIG. 1).

Accordingly, the catch pieces 96 will be reliably engaged by the outside flange portion 80 of the bracket fitting 70, with the medial plate portion 100 of the catch pieces 96 positioned about the annular fastening fitting 54 of the diaphragm 52 so that the cover member 94 is supported by the plurality of catch pieces 96 so as to be held raised a prescribed distance above the diaphragm 52. As a result, the cover member 94 will be attached to the second mounting member 14 via the catch pieces 96 and the bracket fitting 70, and will cover the diaphragm 52 generally entirely so as to protect it. As will be apparent from the preceding discussion, in the present embodiment the projecting catch portion which projects peripherally outward from the second mounting member 14 and extends in the circumferential direction includes the outside flange portion 80 of the bracket fitting 70. The cover member 94 has a full cover structure that covers the diaphragm 52 in its entirety.

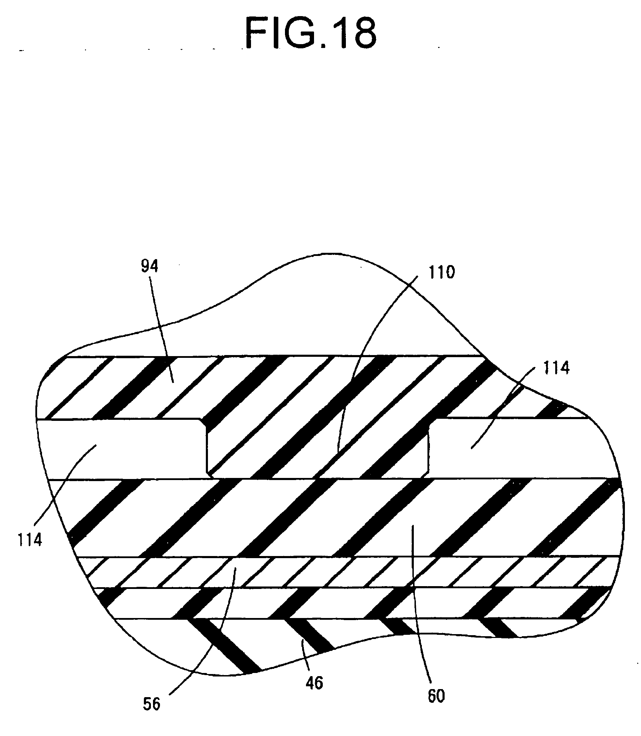

In particular, as shown in FIG. 18, with the catch pieces 96 engaged by the outside flange portion 80, the three spacer projecting portions 110, 110, 110 formed on the cover member 94 are disposed in contact with the rubber sheath layer 60. That is, in this engaged state the height dimension of the spacer projecting portions 110 which project in the axial direction from the outside peripheral edge portion of the cover member 94 will be equal to or greater than the distance separating the rubber sheath layer 60 and the outside peripheral edge portion of the cover member 94 in the axial direction, so that the spacer projecting portions 110 are disposed in contact with the rubber sheath layer 60.

In the present embodiment, the lower edge face of the top plate portion 98 of the catch piece 96 and the lower edge face of the peripheral edge portion of the cover member 94 are situated at approximately the same height, and the height dimension of the spacer projecting portions 110 projecting from the outside peripheral edge portion of the cover member 94 is smaller than the height dimension of the contacting projection 108 projecting downward from the top plate portion 98, whereby elasticity resulting from compressive deformation of the rubber in the sections of contact of the spacer projecting portions 110 against the rubber sheath layer 60 will be less than that in sections of the rubber sheath layer 60 contacted by the contacting projections 108. However, no limitation is imposed thereby, and it would be acceptable for example to instead make the spacer projecting portion height dimension greater than the contacting projection height dimension so as to produce higher elasticity in sections of the rubber sheath layer contacted by the spacer projecting portions than in sections of the rubber sheath layer contacted by the contacting projections. Alternatively, an arrangement whereby, with the catch pieces engaged by the outside flange portion and the contacting projections disposed in contact with the rubber sheath layer, the spacer projecting portions are positioned spaced a prescribed distance apart in the axial direction from the rubber sheath layer, with the spacer projecting portions coming into contact against the rubber sheath layer during elastic deformation of the cover member.

With regard to the lower edge faces of the contacting projections 108 and the spacer projecting portions 110 situated in opposition to the rubber sheath layer 60 in the axial direction, by making the spacer projecting portion 110 edges larger than the contacting projection 108 edges, the spacer projecting portions 110 will contact the rubber sheath layer 60 over a larger contact area than do the contacting projections 108.

Furthermore, in the present embodiment, with the contacting projections 108 and the spacer projecting portions 110 which have been formed in alternating fashion in the circumferential direction disposed in contact against the rubber sheath layer 60, of the sections situated between circumferentially adjacent-contacting projections 108 and spacer projecting portions 110, those sections at the outside peripheral edge portion of the cover member 94 in which no spacer projecting portion 110 is formed and those sections of the top plate portion 98 of the catch pieces 96 in which no contacting projection 108 is formed are spaced apart by prescribed distance from the rubber sheath layer 60 in the axial direction. That is, a gap will form in the circumferential direction between the contacting projections 108 and the spacer projecting portions 110 situated between the axially opposing faces of the rubber sheath layer 60 and the cover member 94 or catch pieces 96. This gap is utilized to form atmosphere-communicating passages 114 connecting areas 112 between the opposing faces of the cover member 94 and the diaphragm 52 to the inside of the cover member 94, with the outside space.

In the automotive engine mount 10 having the structure described above, with the catch pieces 96 formed on the cover member 94 positioned engaged with the outside flange portion 80 of the bracket fitting 70, the contacting projections 108 will be pressed against the rubber sheath layer 60 in the axial direction, thereby affording a high level of restraining engaging force directed in the axial direction of the catch pieces 96 and the outside flange portion 80. Stable attachment of the cover member 94 to the second mounting member 14 is afforded thereby, and since the cover member 94 resists detachment from the second mounting member 14, a consistent state of protection of the diaphragm 52 will be maintained.

Additionally, by pressing the contacting projections 108 against the rubber sheath layer 60 in the axial direction so that they contact and dig into it, the cover member 94 may be advantageously prevented from turning with respect to the diaphragm 52.

Furthermore, since the rubber sheath layer 60 covers the inward flange portion 56 of the annular fastening fitting 54, and the contacting projections 108 are juxtaposed against the annular fastening fitting 54 via the intervening rubber sheath layer 60, the cover member 94 will be held stably against the annular fastening fitting 54 via the contacting projections 108 and the rubber sheath layer 60. Additionally, the contacting projections 108 will be prevented from digging into the rubber sheath layer 60 more than necessary, affording improved durability of the rubber sheath layer 60. As a result, the elasticity of the rubber sheath layer 60 will be maintained consistently over extended periods, and the cover member 94 will be maintained in a state of highly stable attachment.

Furthermore, by forming the catch pieces 96 at multiple locations along the circumference of the cover member 94, and using thin synthetic resin material to produce the cover member 94 and the catch pieces 96, the catch pieces 96 will be endowed with a relatively high level of allowable deformation. Thus, when attaching the cover member 94, the catch pieces 96 will deform to as to splay diametrically outward and reduce contact resistance when the catch pieces 96 surmount the outside flange portion 80, while facilitating interlocking of the catch pieces 96 with the outside flange portion 80 so as to make it easier to attach the cover member 94 to the second mounting member 14.

Owing to this simplified cover member 94 assembly operation, naturally the cover member 94 may be attached to the mount in the isolated state depicted in FIGS. 1 to 4 prior to fastening of the first mounting member 12 to the power unit via the power unit mounting member 82, and fastening of the second mounting member 14 to the vehicle body via the bracket fitting 70. However with the mount already installed on the automobile by fastening the first mounting member 12 and the second mounting member 14 to the power unit and the body, it will be additionally possible, for example, to open the hood of the automobile and to attach the cover member 94 over the diaphragm 52 in the engine compartment from above. This eliminates the need to take special care to avoid damage to the cover member 94 through contact with other parts during installation of the mount unit in the automobile, thus facilitating the installation procedure.

In the present embodiment in particular, as the contacting projections 108 have inverted triangular cross section extending with tapering shape in the diametrical direction of the cover member 94, the contacting projections 108 can be embedded in localized fashion so as to extend in the diametrical direction with respect to the rubber sheath layer 60. Thus, elasticity of the rubber sheath layer 60 may be obtained more effectively even with small contacting projections 108, affording advantages such as lower cost and lighter weight of the cover member 94, while more advantageously achieving the effects of preventing detachment and preventing turning of the cover member 94 with respect to the second mounting member 14.

In the present embodiment, the three catch pieces 96 formed at equidistant intervals in the outside peripheral section of the cover member 94 afford stable support of the cover member 94 by the catch pieces 96. Additionally, as the contacting projections 108 are disposed at locations where the catch pieces 96 are formed on the cover member 94, elasticity of the rubber based on the contacting projections 108 pressing against the rubber sheath layer 60 in the axial direction will be exerted on the catch pieces 96 more efficiently, affording enhanced stability of attachment of the cover member 94.

Furthermore, the cover member 94 according to the present embodiment is provided in its outside peripheral section with the spacer projecting portions 110 contacting the rubber sheath layer 60 over a larger contact area than do the contacting projections 108, at locations along the circumference different from those of the contacting projections 108 in the sections of contact with the rubber sheath layer 60. Thus, with the cover member 94 attached to the second mounting member 14, if for example the center section of the cover member 94 happens to strike against another component and experience sagging, giving rise to force acting on the catch pieces 96 so that they deform diametrically outward, the extent of sagging deformation of the outside peripheral section of the cover member 94 will be restricted by the spacer projecting portions 110 coming into contact with the rubber sheath layer 60 thereby limiting the extent of deformation of the catch pieces 96 outward in the diametrical direction. For this reason, good engagement of the catch pieces 96 and the outside flange portion 80 will be maintained for enhanced stability of attachment of the cover member 94.

The spacer projecting portions 110 are positioned in circumferential center sections between the contacting projections 108 at the outside peripheral edge portion of the cover member 94, and formed at equidistant intervals at the outside peripheral edge portion of the cover member 94. Zones of contact of the contacting projections 108 and the spacer projecting portions 110 against the rubber sheath layer 60 are effectively assured thereby, and the aforementioned effects afforded by this contact are achieved more advantageously. Moreover, as the cover member 94 is supported at its outside peripheral edge portion contact at multiple locations along the circumference of the rubber sheath layer 60 via a total of six contacting projections 108 and spacer projecting portions 110 formed at equidistant intervals on the circumference, localized sag of the cover member 94 in the event that it strikes against another component will be advantageously inhibited, affording improved durability of the cover member 94.

Additionally, while between the axially opposing faces of the cover member 94 and the rubber sheath layer 60, a plurality of atmosphere-communicating passages 114 are formed in the circumferential direction between the contacting projections 108 and the spacer projecting portions 110, since these have approximately identical length along the entire circumference in the circumferential direction, communication of the area 112 between the opposed faces of the cover member 94 and the diaphragm 52 with the outside space may be efficiently assured. The area 112 between the opposed faces of the cover member 94 and the diaphragm 52 can thereby by prevented from assuming a hermetic state, thereby eliminating the problem of variability in the characteristics of the mount resulting from changes in the extent of elastic deformation of the diaphragm 52 caused by air spring action under hermetic conditions.

Expressed another way, because the spacer projecting portions 110 come into contact against the rubber sheath layer 60 in circumferential center sections between the contacting projections 108 at the outside peripheral edge portion of the cover member 94, the gaps between circumferentially adjacent contacting projections 108 situated between the opposed faces of the cover member 94 and the rubber sheath layer 60 are more resistant to deforming. Consequently, the atmosphere-communicating passages 114 defined by these gaps will maintain their shape better, and the spring characteristics desired of the mount will be achieved more consistently.

Moreover, in the present embodiment, since the projecting catch portion for engaging the catch pieces 96 of the cover member 94 is constituted by the outside flange portion 80 which defines the terminal location for force-fitting the second mounting member 14 into the bracket fitting 70, there is no need to provide the second mounting member 14 directly with a special projecting catch portion, thereby advantageously affording lower costs owing to the smaller number of parts.

Accordingly, in the automotive engine mount 10 according to the present embodiment, not only is attachment structure for attaching the cover member 94 to the second mounting member 14 a simple one, but the cover member 94 is attached thereby in a reliable manner, thus advantageously affording protection of the diaphragm 52.

While the present invention has been described in detail herein in terms of one preferred embodiment, it is to be understood that the present invention may be embodied with various changes, modifications and improvements which may occur to those skilled in the art, without departing from the spirit and scope of the invention.

For example, the shape, size, structure, number and placement on the cover member 94 of the contacting projections 108 and the catch pieces 96 are not limited to those described herein by way of example. Specifically, whereas in the preceding embodiment, three catch pieces 96 and three contacting projections 108 of respectively identical form are situated at equidistant intervals at the outside peripheral edge portion of the cover member 94, it would be acceptable instead to form two or four; to employ different respective shape, size, and/or structure; or to position the catch pieces and the contacting projections at non-equidistant intervals on the outside peripheral edge portion of the cover member.

Moreover, the contacting projections 108 may be situated at locations different from the locations of the catch pieces 96 in the cover member 94; or provided at locations in addition to the locations of the catch pieces 96. For example, it would be possible to replace the spacer projecting portions 110 situated circumferentially between the catch pieces 96 where the contacting projections 108 have been formed, with additional contacting projections that dig in upon contact with the rubber sheath layer 60. From the above it will be appreciated that the spacer projecting portions 110 are not an essential element herein.

While in the preceding embodiment, the cover member 94 is of full cover structure covering the diaphragm 52 in its entirety, a full cover structure is not essential. For instance, it would be acceptable to make in the cover member 94 through-holes for the purpose of venting or the like from the area 112 between the opposed faces of the cover member 94 and the diaphragm 52.

Also, while in the preceding embodiment the annular fastening fitting 54 has a tapered, generally round tubular shape becoming gradually smaller in diameter dimension from the bottom to the top, a round tubular shape or annular disk shape extending in the axial direction would be acceptable as well.

Additionally, it is not mandatory for the projecting catch portion that projects to the outer peripheral side of the second mounting member 14 and engages the catch pieces 96 of the cover member 94 to be constituted by an outside flange portion 80 extending continuously all the way around the edge of the opening of the cup-shaped portion 72 of the bracket fitting 70 as described above; it would be possible for example to instead situate the catch portion only at the locations for engaging the catch pieces at the outside peripheral section of the second mounting member or of the bracket fitting, so that the catch portion projects partly along the circumferential direction. Also, where the plurality of catch pieces have different lengths in the axial direction, in association therewith the locations of the plurality of projecting catch portions may differ in the axial direction.

Moreover, the movable rubber film 36 provided to the partition member 32 herein is not an essential element; furthermore, the shape, size, structure, and number of the orifice passage 66 are not limited to those shown herein by way of example. Specifically, it would be acceptable for multiple orifice passages to be formed in the partition member, and the resonance frequency of fluid flowing through individual orifice passages to be tuned to different frequency ranges so as to produce vibration damping action of vibration in multiple frequency ranges.

Furthermore, whereas the preceding embodiment describes the present invention embodied in a mount structure providing vibration damped support to the power unit suspended from the body wherein the pressure receiving chamber 62 situated below the partition member 32 in the axial direction of the mount is partly defined by the main rubber elastic body 16 and the wall of the equilibrium chamber 64 situated above the partition member 32 mount is partly defined by the diaphragm 52, with the fastening portion (fastening fitting 18) of the first mounting member 12 projecting downward from the main rubber elastic body 16 fastened to the power unit side while the second mounting member 14 is fastened to the vehicle body side, no particular limitation is imposed thereby. It is possible for the present invention to be embodied analogously, for example, in an engine mount of resting design as proposed in JP-A-2003-148548 or JP-A-2007-107712 wherein with the mount in the installed state the first mounting member is positioned on the upper side and fastened to the power unit side, while the second mounting member is positioned on the lower side and fastened to the vehicle body side. Thus, the support load of the power unit is exerted in a direction urging the first mounting member and the second mounting member closer together in the axial direction of the mount. Specifically, as proposed in the publications cited above, in an engine mount of this type, typically the upper opening of a tubular portion of the second mounting member will be closed off fluid-tightly by the main rubber elastic body and the lower opening of the tubular portion of the second mounting member will be closed off fluid-tightly by a diaphragm. Accordingly, the cup-shaped cover member according to the present invention may be attached covering the diaphragm from below in the vertical direction.

Additionally, whereas the preceding embodiment describes the present invention embodied in an automotive engine mount by way of a specific example, the invention may be embodied analogously in an automotive body mount or diff mount, or more generally in vibration damping devices for non-automotive vibrating bodies of various kinds.

## Claims

1. A fluid filled type vibration damping device (10) including: a first mounting member (12) positioned spaced apart from a first opening of a tubular portion of a second mounting member (14), with the first mounting member (12) and the second mounting member (14) being connected by a main rubber elastic body (16); a fluid chamber filled with non-compressible fluid and formed by fluid-tight closure of the first opening of the tubular portion by the main rubber elastic body (16) and by fluid-tight closure of another opening of the tubular portion by a flexible rubber film (52); a partition member (32) supported on the second mounting member (14) thereby dividing the fluid chamber into a pressure receiving chamber (62) a portion of whose wall is defined by the main rubber elastic body (16), and an equilibrium chamber (64) a portion of whose wall is defined by the flexible rubber film (52); and an orifice passage (66) through which the pressure receiving chamber (62) and the equilibrium chamber (64) communicate with each other,
wherein a projecting catch portion (80) is formed projecting towards an outer peripheral side from the second mounting member (14) and extending in a circumferential direction,
an annular fastening fitting (54) is bonded by vulcanization to an outside peripheral edge portion of the flexible rubber film (52), with the annular fastening fitting (54) fastened to the tubular portion of the second mounting member (14) thereby providing the other opening of the tubular portion with fluid-tight closure by the flexible rubber film (52), and
a rubber sheath layer (60) is integrally formed with the flexible rubber film (52) over an outside face at an inner peripheral edge portion of the annular fastening fitting (54) to which the outside peripheral edge portion of the flexible rubber film (52) has been bonded by vulcanization,
**characterised in that** a cover member (94) is attached covering the flexible rubber film (52) from an outside, the cover member (94) includes at least one contacting projection (108) provided to an outside peripheral section of the cover member (94) in a part thereof that contacts the rubber sheath layer (60), and catch pieces (96) extending in an axial direction towards the tubular portion of the second mounting member (14) disposed at multiple locations along a circumference of an outside peripheral edge portion of the cover member (94), and
the catch pieces (96) engage the projecting catch portion (80) in a direction arresting detachment in the axial direction so that the contacting projection (108) is pressed in the axial direction against the rubber sheath layer (60).

2. The fluid filled type vibration damping device (10) according to claim 1, wherein the cover member (94) has a full cover structure covering the flexible rubber film (52) over an entire area thereof.

3. The fluid filled type vibration damping device (10) according to claim 1 or 2, wherein the contacting projection (108) in the cover member (94) has a tapered shape.

4. The fluid filled type vibration damping device (10) according to any one of claims 1-3, wherein the contacting projection (108) in the cover member (94) has a shape extending in a diametrical direction.

5. The fluid filled type vibration damping device (10) according to any one of claims 1-4, wherein atmosphere-communicating passages (114) are formed connecting a space defined between opposing faces of the cover member (94) and the flexible rubber film (52) to an outside space, and the atmosphere-communicating passages (114) are situated in sections devoid of contacting projections (108) between juxtaposed faces of the rubber sheath layer (60) and the outside peripheral section of the cover member (94).

6. The fluid filled type vibration damping device (10) according to any one of claims 1-5, wherein the contacting projection (108) is disposed at locations of the catch pieces (96) on the outside peripheral section of the cover member (94).

7. The fluid filled type vibration damping device (10) according to any one of claims 1-6, wherein spacer projecting portions (110) which contact the rubber sheath layer (60) over a greater contact area than the contacting projections (108) are formed in the outside peripheral section of the cover member (94) at locations on the circumference thereof different from those of the contacting projections (108) in the section contacting the rubber sheath layer (60).

8. The fluid filled type vibration damping device (10) according to claim 7, the spacer projecting portions (110) are formed in circumferentially central sections between adjacent contacting projections (108) in the circumferential direction in the outside peripheral section of the cover member (94).

9. The fluid filled type vibration damping device (10) according to any one of claims 1-8, wherein the annular fastening fitting (54) has a tubular shape, a swage fastening portion (58) for fastening to the tubular portion of the second mounting member (14) is formed on a rim of a first opening in the axial direction, an inward flanged portion (56) extending diametrically inward is formed on a rim of another opening in the axial direction, and the outside peripheral edge portion of the flexible rubber film (52) is bonded by vulcanization to the inward flanged portion (56) so that the rubber sheath layer (60) is formed sheathing an outside face of the inward flanged portion (56).

10. The fluid filled type vibration damping device (10) according to any one of claims 1-9, wherein a bracket fitting (70) is externally fastened to the second mounting member (14), with an axial end edge of the bracket fitting (70) projecting up from the outside peripheral face of the second mounting member (14), and with the projecting section of the bracket fitting (70) constituting a projecting catch portion (80).

11. The fluid filled type vibration damping device (10) according to any one of claims 1-10, wherein the cover member (94) is composed of an integrally molded component of synthetic resin material.

## Patentansprüche

1. Fluidgefüllte Schwingungsdämpfungsvorrichtung (10), die umfasst: ein erstes Montageelement (12), das beabstandet von einer ersten Öffnung eines röhrenförmigen Abschnitts eines zweiten Montageelements (14) positioniert ist, wobei das erste Montageelement (12) und das zweite Montageelement (14) durch einen elastischen Hauptgummikörper (16) verbunden sind; eine Fluidkammer, die mit einem nicht komprimierbaren Fluid gefüllt ist und durch fluiddichtes Verschließen der ersten Öffnung des rohrförmigen Abschnitts durch den elastischen Hauptgummikörper (16) sowie durch fluiddichtes Verschließen einer weiteren Öffnung des rohrförmigen Abschnitts durch eine flexible dünne Gummischicht (52) gebildet ist; ein Trennwandelement (32), das auf dem zweiten Montageelement (14) unterstützt ist und **dadurch** die Fluidkammer in eine Druckaufnahmekammer (62), wovon ein Abschnitt ihrer Wand durch den elastischen Hauptgummikörper (16) definiert ist, und in eine Ausgleichskammer (64), wovon ein Abschnitt ihrer Wand durch die flexible dünne Gummischicht (52) definiert ist, unterteilt ist; und einen Blendendurchlass (66), durch den die Druckaufnahmekammer (62) und die Ausgleichskammer (64) miteinander kommunizieren,
wobei ein vorstehender Einfangabschnitt (80) so ausgebildet ist, dass er von dem zweiten Montageelement (14) zu einer äußeren Umfangsseite vorsteht und sich in einer Umfangsrichtung erstreckt,
eine ringförmige Befestigungsarmatur (54) durch Vulkanisieren an einem äußeren Umfangskantenabschnitt der flexiblen dünnen Gummischicht (52) haftet, wobei die ringförmige Befestigungsarmatur (54) an dem rohrförmigen Abschnitt des zweiten Montageelements (14) befestigt ist, um **dadurch** die andere Öffnung des rohrförmigen Abschnitts zu schaffen, die durch die flexible dünne Gummischicht (52) fluiddicht verschlossen ist, und
eine Gummihüllenschicht (60) mit der flexiblen dünnen Gummischicht (52) über einer Außenfläche eines inneren Umfangskantenabschnitts der ringförmigen Befestigungsarmatur (54), mit der der äußere Umfangskantenabschnitt der flexiblen dünnen Gummischicht (52) durch Vulkanisieren verbunden worden ist, einteilig ausgebildet ist,
**dadurch gekennzeichnet, dass** ein Abdeckelement (94) angebracht ist, das die flexible dünne Gummischicht (52) von außen abdeckt, wobei das Abdeckelement (94) wenigstens einen Kontaktherstellungsvorsprung (108), der an einem äußeren Umfangsabschnitt des Abdeckelements (94) in einem Teil hiervon vorgesehen ist, der mit der Gummihüllenschicht (60) in Kontakt ist, und Einfangteile (96), die sich in einer axialen Richtung zu dem rohrförmigen Abschnitt des zweiten Montageelements (14) erstrecken und an mehreren Stellen längs eines Umfangs eines äußeren Umfangskantenabschnitts des Abdeckelements (94) angeordnet sind, aufweist und
die Einfangteile (96) mit dem vorstehenden Einfangabschnitt (80) in einer Richtung in Eingriff sind, in der eine Ablösung in axialer Richtung verhindert wird, so dass der Kontaktherstellungsvorsprung (108) in axialer Richtung gegen die Gummihüllenschicht (60) gedrängt wird.

2. Fluidgefüllte Schwingungsdämpfungsvorrichtung (10) nach Anspruch 1, wobei das Abdeckelement (94) eine Vollabdeckungsstruktur besitzt, die die flexible dünne Gummischicht (52) auf ihrer gesamten Fläche abdeckt.

3. Fluidgefüllte Schwingungsdämpfungsvorrichtung (10) nach Anspruch 1 oder 2, wobei der Kontaktherstellungsvorsprung (108) in dem Abdeckelement (94) eine konisch zulaufende Form hat.

4. Fluidgefüllte Schwingungsdämpfungsvorrichtung (10) nach einem der Ansprüche 1-3, wobei der Kontaktherstellungsvorsprung (108) in dem Abdeckelement (94) eine Form besitzt, die in einer diametralen Richtung verläuft.

5. Fluidgefüllte Schwingungsdämpfungsvorrichtung (10) nach einem der Ansprüche 1-4, wobei Atmosphärenkommunikationsdurchlässe (114) ausgebildet sind, die einen Raum, der zwischen gegenüberliegenden Flächen des Abdeckelements (94) und der flexiblen dünnen Gummischicht (52) definiert ist, mit einem äußeren Raum verbinden, und wobei sich die Atmosphärenkommunikationsdurchlässe (114) in Abschnitten ohne Kontaktherstellungsvorsprünge (108) zwischen nebeneinander liegenden Flächen der Gummihüllenschicht (60) und dem äußeren Umfangsabschnitt des Abdeckelements (94) befinden.

6. Fluidgefüllte Schwingungsdämpfungsvorrichtung (10) nach einem der Ansprüche 1-5, wobei der Kontaktherstellungsvorsprung (108) an Stellen der Einfangteile (96) an dem äußeren Umfangsabschnitt des Abdeckelements (94) angeordnet ist.

7. Fluidgefüllte Schwingungsdämpfungsvorrichtung (10) nach einem der Ansprüche 1-6, wobei in einem äußeren Umfangsabschnitt des Abdeckelements (94) an Stellen seines Umfangs, die von jenem der Kontaktherstellungsvorsprünge (108) in dem mit der Gummihüllenschicht (60) in Kontakt befindlichen Abschnitt verschieden sind, Abstandshalter-Vorsprungsabschnitte (110) ausgebildet sind, die mit der Gummihüllenschicht (60) über einen größeren Kontaktbereich als die Kontaktherstellungsvorsprünge (108) in Kontakt sind.

8. Fluidgefüllte Schwingungsdämpfungsvorrichtung (10) nach Anspruch 7, wobei die Abstandshalter-Vorsprungsabschnitte (110) in in Umfangsrichtung mittigen Abschnitten zwischen benachbarten Kontaktherstellungsvorsprüngen (108) in der Umfangsrichtung im äußeren Umfangsabschnitt des Abdeckelements (94) ausgebildet sind.

9. Fluidgefüllte Schwingungsdämpfungsvorrichtung (10) nach einem der Ansprüche 1-8, wobei die ringförmige Befestigungsarmatur (54) eine Ringform hat, wobei ein Gesenkbefestigungsabschnitt (58) zum Befestigen des rohrförmigen Abschnitts des zweiten Montageelements (14) an einem Rand einer ersten Öffnung in axialer Richtung ausgebildet ist, ein nach innen weisender Flanschabschnitt (56), der sich diametral nach innen erstreckt, an einem Rand einer weiteren Öffnung in axialer Richtung ausgebildet ist und der äußere Umfangskantenabschnitt der flexiblen dünnen Gummischicht (52) durch Vulkanisieren an dem nach innen weisenden Flanschabschnitt (56) haftet, so dass die Gummihüllenschicht (60) so geformt ist, dass sie eine Außenfläche des nach innen gerichteten Flanschabschnitts (56) abdeckt.

10. Fluidgefüllte Schwingungsdämpfungsvorrichtung (10) nach einem der Ansprüche 1-9, wobei eine Stützarmatur (70) außen an dem zweiten Montageelement (14) befestigt ist, wobei eine axiale Stirnkante der Stützarmatur (70) von der äußeren Umfangsfläche des zweiten Montageelements (14) nach oben vorsteht und der vorstehende Abschnitt der Stützarmatur (70) einen vorstehenden Einfangabschnitt (80) bildet.

11. Fluidgefüllte Schwingungsdämpfungsvorrichtung (10) nach einem der Ansprüche 1-10, wobei das Abdeckelement (94) aus einer einteilig gegossenen Komponente aus Kunstharzmaterial gebildet ist.

## Revendications

1. Dispositif d'amortissement de vibration de type rempli de fluide (10) comprenant: un premier élément de montage (12) positionné de manière espacée par rapport à une première ouverture d'une partie tubulaire d'un second élément de montage (14), le premier élément de montage (12) et le second élément de montage (14) étant reliés par un corps principal élastique en caoutchouc (16) ; une chambre de fluide remplie d'un fluide non compressible et formée par la fermeture étanche au fluide de la première ouverture de la partie tubulaire au moyen du corps principal élastique en caoutchouc (16) et par la fermeture étanche au fluide d'une autre ouverture de la partie tubulaire au moyen d'un film en caoutchouc flexible (52) ; un élément de séparation (32) supporté sur le second élément de montage (14), divisant ainsi la chambre de fluide en une chambre de réception de pression (62) dont une partie de paroi est définie par le corps principal élastique en caoutchouc (16) et une chambre d'équilibre (64) dont une partie de paroi est définie par le film en caoutchouc flexible (52) ; et un passage à orifice (66) à travers lequel la chambre de réception de pression (62) et la chambre d'équilibre (64) communiquent entre elles,
dans lequel est formée une partie d'accrochage saillante (80) qui fait saillie vers un côté périphérique externe depuis le second élément de montage (14) et s'étend dans une direction circonférentielle,
une ferrure de fixation annulaire (54) est collée par vulcanisation à une partie de bord périphérique extérieure du film en caoutchouc flexible (52), la ferrure de fixation annulaire (54) étant fixée à la partie tubulaire du second élément de montage (14), fournissant une fermeture étanche au fluide à l'autre ouverture de la partie tubulaire au moyen du film en caoutchouc flexible (52), et
une couche de gaine en caoutchouc (60) est formée d'un seul tenant avec le film en caoutchouc flexible (52) sur une face extérieure dans une partie de bord périphérique interne de la ferrure de fixation annulaire (54) sur laquelle la partie de bord périphérique extérieure du film en caoutchouc flexible (52) a été collée par vulcanisation,
**caractérisé en ce qu'**un élément couvrant (94) est fixé de sorte à assurer la couverture du film en caoutchouc flexible (52) depuis une partie extérieure, l'élément couvrant (94) comprenant au moins une saillie de contact (108) prévue sur une section périphérique extérieure de l'élément couvrant (94) dans une partie de celui-ci qui est en contact avec la couche de gaine en caoutchouc (60), et les pièces d'accrochage (96) s'étendant dans une direction axiale vers la partie tubulaire du second élément de montage (14), disposées à des emplacements multiples le long d'une circonférence d'une partie de bord périphérique extérieure de l'élément couvrant (94), et
les pièces d'accrochage (96) se mettent en prise avec la partie d'accrochage saillante (80) dans une direction arrêtant le détachement dans la direction axiale de telle sorte que la saillie de contact (108) est pressée dans la direction axiale contre la couche de gaine en caoutchouc (60).

2. Dispositif d'amortissement de vibration de type rempli de fluide (10) selon la revendication 1, dans lequel l'élément couvrant (94) a une structure couvrante totale couvrant le film en caoutchouc flexible (52) sur l'ensemble de la surface de celui-ci.

3. Dispositif d'amortissement de vibration de type rempli de fluide (10) selon la revendication 1 ou 2, dans lequel la saillie de contact (108) dans l'élément couvrant (94) a une forme conique.

4. Dispositif d'amortissement de vibration de type rempli de fluide (10) selon l'une quelconque des revendications 1 à 3, dans lequel la saillie de contact (108) dans l'élément couvrant (94) a une forme s'étendant dans une direction diamétrale.

5. Dispositif d'amortissement de vibration de type rempli de fluide (10) selon l'une quelconque des revendications 1 à 4, dans lequel des passages communiquant avec l'atmosphère (114) sont formés en reliant un espace défini entre les faces opposées de l'élément couvrant (94) et du film en caoutchouc flexible (52) à un espace extérieur, et les passages communiquant avec l'atmosphère (114) se trouvent dans des sections dépourvues de saillies de contact (108) entre les faces juxtaposées de la couche de gaine en caoutchouc (60) et de la section périphérique extérieure de l'élément couvrant (94).

6. Dispositif d'amortissement de vibration de type rempli de fluide (10) selon l'une quelconque des revendications 1 à 5, dans lequel la saillie de contact (108) est disposée en des emplacements des pièces d'accrochage (96) sur la section périphérique extérieure de l'élément couvrant (94).

7. Dispositif d'amortissement de vibration de type rempli de fluide (10) selon l'une quelconque des revendications 1 à 6, dans lequel des parties saillantes d'espacement (110) qui sont en contact avec la couche de gaine en caoutchouc (60) sur une surface de contact supérieure aux saillies de contact (108) sont formées dans la partie périphérique extérieure de l'élément couvrant (94) en des emplacements sur la circonférence de celui-ci différents de ceux des saillies de contact (108) dans la section en contact avec la couche de gaine en caoutchouc (60).

8. Dispositif d'amortissement de vibration de type rempli de fluide (10) selon la revendication 7, dans lequel les parties saillantes d'espacement (110) sont formées dans des sections circonférentiellement centrales entre des saillies de contact adjacentes (108) dans la direction circonférentielle dans la section périphérique extérieure de l'élément couvrant (94).

9. Dispositif d'amortissement de vibration de type rempli de fluide (10) selon l'une quelconque des revendications 1 à 8, dans lequel la ferrure de fixation annulaire (54) a une forme tubulaire, une partie de fixation emboutie (58) pour fixation à la partie tubulaire du second élément de montage (14) est formée sur un rebord d'une première ouverture dans la direction axiale, une partie à collerette tournée vers l'intérieur (56) s'étendant diamétralement vers l'intérieur est formée sur un rebord d'une autre ouverture dans la direction axiale, et la partie de bord périphérique extérieure du film en caoutchouc flexible (52) est collée par vulcanisation à la partie à collerette tournée vers l'intérieur (56) de telle sorte à former la couche de gaine en caoutchouc (60), assurant le gainage d'une face extérieure de la partie à collerette tournée vers l'intérieur (56).

10. Dispositif d'amortissement de vibration de type rempli de fluide (10) selon l'une quelconque des revendications 1 à 9, dans lequel une ferrure de support (70) est fixée de manière externe au second élément de montage (14), un bord d'extrémité axial de la ferrure de support (70) faisant saillie vers le haut depuis la face périphérique extérieure du second élément de montage (14), et la section saillante de la ferrure de support (70) constituant une partie d'accrochage saillante (80).

11. Dispositif d'amortissement de vibration de type rempli de fluide (10) selon l'une quelconque des revendications 1 à 10, dans lequel l'élément couvrant (94) est constitué d'un composant d'un seul tenant moulé en matériau de résine synthétique.
